(19) Europäisches Patentamt
European Patent Office
Office européen des brevets

(11) **EP 4 443 286 A1**

(12) **EUROPEAN PATENT APPLICATION**
published in accordance with Art. 153(4) EPC

(43) Date of publication:
**09.10.2024 Bulletin 2024/41**

(21) Application number: **22919869.2**

(22) Date of filing: **10.10.2022**

(51) International Patent Classification (IPC):
**G06F 3/14** (2006.01)

(52) Cooperative Patent Classification (CPC):
**G06F 3/14**

(86) International application number:
**PCT/CN2022/124254**

(87) International publication number:
**WO 2023/134235 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2022 CN 202210033857**

(71) Applicant: **Huawei Technologies Co., Ltd.**
**Shenzhen, Guangdong 518129 (CN)**

(72) Inventors:
• **XU, Weiwei**
**Shenzhen, Guangdong 518129 (CN)**
• **WEN, Jinsong**
**Shenzhen, Guangdong 518129 (CN)**
• **WU, Lei**
**Shenzhen, Guangdong 518129 (CN)**
• **YU, Quanhe**
**Shenzhen, Guangdong 518129 (CN)**
• **ZHONG, Shuncai**
**Shenzhen, Guangdong 518129 (CN)**

(74) Representative: **Maiwald GmbH**
**Engineering**
**Elisenhof**
**Elisenstrasse 3**
**80335 München (DE)**

(54) **IMAGE PROCESSING METHOD AND ELECTRONIC DEVICE**

(57) Embodiments of this application provide an image processing method and an electronic device, and relate to the field of image processing technologies. The method includes: obtaining display information of a to-be-displayed image at current target backlight luminance of a display and display information of the to-be-displayed image at luminance that is of the display and that is higher than the current target backlight luminance, and obtaining display information of the to-be-displayed image based on the two types of display information, so that display effect of the image can be improved in a scenario in which backlight of the display is adjustable.

FIG. 1

## Description

This application claims priority to Chinese Patent Application No. 202210033857.8, filed with the China National Intellectual Property Administration on January 12, 2022 and entitled "IMAGE PROCESSING METHOD AND ELECTRONIC DEVICE", which is incorporated herein by reference in its entirety.

## TECHNICAL FIELD

Embodiments of this application relate to the field of image processing technologies, and in particular, to an image processing method and an electronic device.

## BACKGROUND

Currently, when displaying an image or a video, an electronic device may perform tone mapping on display luminance of an image pixel on a display based on maximum display luminance of the display.
However, in a current tone mapping method, in a scenario in which backlight of a display is adjustable, display effect of an image or a video is poor.

## SUMMARY

To resolve the foregoing technical problem, this application provides an image processing method and an apparatus. In the method, display information of a to-be-displayed image on a display may be obtained based on maximum display luminance of the display and current target backlight luminance, so that image display effect can be improved in a scenario in which backlight of the display is adjustable.
According to a first aspect, an embodiment of this application provides an image processing method. The method includes: obtaining first display information of a to-be-displayed target image based on current target backlight luminance of a display; obtaining second display information of the target image based on maximum display luminance of the display and the current target backlight luminance; processing the first display information and the second display information based on preset information of the target image, to obtain third display information of the target image, where the preset information includes information related to luminance of the target image; and displaying the target image on the display based on the third display information. In this way, in a scenario in which the display has particular backlight luminance, considering that actual luminance of the display may be higher than the backlight luminance, in this method, the first display information of the image may be obtained with reference to the backlight luminance, then the second display information of the image may be obtained with reference to the maximum display luminance and the backlight luminance of the display, and the two types of display information may be processed, to obtain final display information of the image. In this way, the final display information can combine the backlight luminance and the maximum display luminance, so that adaptation effect of the image on the display is improved, thereby improving image display effect.
For example, when the second display information is obtained, the second display information of the image may be obtained based on luminance that is greater than the current target backlight luminance and that is less than or equal to the maximum display luminance. This can avoid a case in which luminance of a highlighted region is increased to excessively high when the target image is displayed based on the third display information.
For example, the target image may be an independent image, or may be one frame of image in a video. This is not limited in this application.
For example, the current target backlight luminance is expected backlight luminance.
For example, the maximum display luminance of the display is 500 nits, and a current backlight intensity level is set to 10%, to obtain the current target backlight luminance: 50 nits. However, after the current backlight luminance level is set to 10%, current backlight luminance (that is, actual backlight luminance) of the display may be higher than 50 nits, for example, 100 nits. Therefore, the backlight luminance corresponding to the backlight intensity level herein may be referred to as the current target backlight luminance, that is, the backlight luminance expected by a system or a user.
According to the first aspect, the obtaining first display information of a to-be-displayed target image based on current target backlight luminance of a display includes: obtaining a first tone mapping curve of the to-be-displayed target image; and processing the first tone mapping curve based on the current target backlight luminance of the display, to obtain a second tone mapping curve of the target image as the first display information.
For example, the first tone mapping curve may be obtained from a source of the target image, or may be generated at an image display end. This is not limited in this application.
The source information may be any one or more types of information obtained by analyzing information carried in an image. The source information may be metadata information of an image, and is carried in a bitstream for transmission.

For example, the first tone mapping curve may be a global initial tone mapping curve or a local initial tone mapping curve carried in the bitstream.

For example, when the first tone mapping curve is the local (for example, a local image region of the target image) initial tone mapping curve, the third display information of the local image region of the target image may be obtained according to the method in the first aspect.

For example, when the first tone mapping curve is the global (for example, the target image) initial tone mapping curve, the third display information of the target image may be obtained according to the method in the first aspect.

For example, when the first tone mapping curve is processed based on the current target backlight luminance of the display, a processing manner includes but is not limited to scaling processing, translation processing, and the like. This is not limited in this application.

According to the first aspect or any one of the foregoing implementations of the first aspect, the obtaining second display information of the target image based on maximum display luminance of the display and the current target backlight luminance includes: determining first luminance based on the maximum display luminance of the display and the current target backlight luminance, where the first luminance is higher than the current target backlight luminance; and processing the first tone mapping curve based on the first luminance, to obtain a third tone mapping curve of the target image as the second display information.

For example, the first luminance may be less than or equal to the maximum display luminance.

For example, when the first tone mapping curve is processed based on the first luminance, a processing manner includes but is not limited to scaling processing, translation processing, and the like. This is not limited in this application.

According to the first aspect or any one of the foregoing implementations of the first aspect, the preset information includes second luminance of the target image, and the processing the first display information and the second display information based on preset information of the target image, to obtain third display information of the target image includes: obtaining the second luminance of the target image; extracting, from the second tone mapping curve, a first sub-curve whose pixel luminance is less than or equal to the second luminance; obtaining a first tone mapping value that corresponds to the second luminance and that is in the second tone mapping curve; processing the third tone mapping curve based on the first tone mapping value, to generate a fourth tone mapping curve, where a tone mapping value that corresponds to the second luminance and that is in the fourth tone mapping curve is the first tone mapping value; extracting, from the fourth tone mapping curve, a second sub-curve whose pixel luminance is greater than or equal to the second luminance; and connecting the first sub-curve and the second sub-curve based on the second luminance, and obtaining a target tone mapping curve of the target image as the third display information.

For example, the second luminance may be referred to as an anchor. The anchor (the second luminance herein) may be a global anchor, that is, an anchor of the target image, or may be a local anchor, that is, an anchor of a local image region in the target image. When a target tone mapping curve is generated for one frame of image or one image region, initial tone mapping curves and an anchor in pairs may be used for implementation.

For example, when a target tone mapping curve is generated for one frame of image, an initial tone mapping curve of the frame of image and an anchor of the frame of image may be used for implementation.

For example, when a target tone mapping curve is generated for a local image region in one frame of image, an initial tone mapping curve of the local image region in the frame of image and an anchor of the local image region may be used for implementation.

For example, the global anchor may be used as an anchor of a plurality of frames of images or a plurality of image regions, and a global initial tone mapping curve may be used as an initial tone mapping curve of a frame sequence (that is, the plurality of frames of images) or the plurality of image regions.

For example, when the anchor of the target image is obtained, the anchor may be obtained from a source, that is, an anchor of a video or an image may be transmitted into the bitstream.

For example, when the anchor of the target image is obtained, the anchor may alternatively be generated by an image or a video display end (that is, a display device to which the display belongs). This is not limited in this application.

For example, if the second luminance of the target image is, for example, the global anchor of the frame of target image, the second luminance may be a value between a minimum luminance value and a maximum luminance value of an image pixel of the target image.

For example, if the second luminance of the target image is, for example, a local anchor of a local image region in the target image, the second luminance may be a value between a minimum luminance value and a maximum luminance value of an image pixel in the local image region.

For example, the tone mapping curve in each implementation of the first aspect may indicate a mapping relationship between luminance of a pixel (that is, pixel luminance, luminance of a pixel) in an image and display luminance on the display.

According to the first aspect or any one of the foregoing implementations of the first aspect, the obtaining a first tone mapping curve of the to-be-displayed target image includes: obtaining respective first tone mapping curves of a plurality of local regions that constitute the target image; the obtaining the second luminance of the target image includes: obtaining respective second luminance of the plurality of local regions; and the connecting the first sub-curve and the second sub-curve based on the second luminance, and obtaining a target tone mapping curve of the target image as the third display information includes: for the plurality of local regions of the target image, connecting a first sub-curve and a second sub-curve of each of the local regions based on second luminance of each of the local regions, and obtaining respective target tone mapping curves of the plurality of local regions as the third display information of the target image.

In this implementation, each local region in the target image has a corresponding first tone mapping curve (that is, a local tone mapping curve) and a corresponding anchor (that is, a local anchor). In this case, for each local region, a corresponding target tone mapping curve may be generated for each local region based on the process described in the foregoing implementation of the first aspect. Then, when the target image is displayed, tone mapping is performed on each local region based on the corresponding target tone mapping curve, so as to implement display adaptation of the target image on the display with particular backlight.

According to the first aspect or any one of the foregoing implementations of the first aspect, the obtaining the second luminance of the target image includes: obtaining the second luminance of the target image based on a minimum value of the pixel luminance of the target image and an average value of the pixel luminance.

For example, when the second luminance is an anchor of all image regions of the target image, the anchor may be obtained based on a minimum value of pixel luminance of image pixels in the target image and an average value of the pixel luminance.

For example, when the second luminance is an anchor of a local image region of the target image, the anchor may be obtained based on a minimum value of pixel luminance in image pixels in the local image region and an average value of the pixel luminance.

According to the first aspect or any one of the foregoing implementations of the first aspect, the obtaining the second luminance of the target image based on a minimum value of the pixel luminance of the target image and an average value of the pixel luminance includes: clustering image pixels of the target image based on the pixel luminance and pixel locations in the target image, to obtain a plurality of image regions; classifying the plurality of image regions in the target image based on the pixel luminance, to obtain a first-type image region and a second-type image region, where luminance of the first-type image region is higher than luminance of the second-type image region; and determining the second luminance of the target image based on a minimum value of the pixel luminance in the first-type image region and an average value of the pixel luminance.

For example, when the target image is divided into a plurality of image regions, pixels whose pixel luminance is close and whose spatial locations are close may be divided into one image region based on pixel luminance and spatial locations of pixels in the target image, to implement image region division. This is not limited to the foregoing clustering manner.

For example, the first-type image region may be referred to as a highlighted region, and the second-type image may be referred to as a non-highlighted region.

For example, to distinguish between the highlighted region and the non-highlighted region, the highlighted region and the non-highlighted region may be distinguished through comparison between an average luminance value of the image region with a preset threshold. This is not limited in this application.

According to the first aspect or any one of the foregoing implementations of the first aspect, the obtaining first display information of a to-be-displayed target image based on current target backlight luminance of a display includes: processing the to-be-displayed target image based on the current target backlight luminance of the display, to obtain a first image as the first display information.

For example, the image pixels of the target image may be processed based on the current target backlight luminance, and a processing manner includes but is not limited to an image processing manner such as image scaling processing.

According to the first aspect or any one of the foregoing implementations of the first aspect, the obtaining second display information of the target image based on maximum display luminance of the display and the current target backlight luminance includes: determining third luminance based on the maximum display luminance of the display and the current target backlight luminance, where the third luminance is higher than the current target backlight luminance; and processing the target image based on the third luminance, to obtain a second image as the second display information.

For example, the third luminance may be less than or equal to the maximum display luminance.

For example, when the target image is processed based on the third luminance, a processing manner includes but is not limited to an image processing manner such as scaling processing. This is not limited in this application.

According to the first aspect or any one of the foregoing implementations of the first aspect, the preset information includes a gain coefficient of the target image, and the processing the first display information and the second display information based on preset information of the target image, to obtain third display information of the target image includes: obtaining the gain coefficient of the target image; and processing the first image and the second image based on the gain coefficient, to generate a third image as the third display information.

For example, the gain coefficient of the target image may be a pixel-level or downsampling gain coefficient.

For example, the gain coefficient may be used to perform luminance adjustment on the image pixels of the target image.

For example, a gain coefficient of a 5*5 pixel unit may be 1.2, which indicates that image pixels of a 5*5 image region in the target image are brightened by 1.2 times.

For example, regions with a large luminance difference in the target image correspond to different gain coefficients, and a gain coefficient of an image region with higher luminance is higher than a gain coefficient of an image region with more luminance.

For example, a gain coefficient of the highlighted region in the target image is greater than a gain coefficient of the non-highlighted region in the target image.

According to the first aspect or any one of the foregoing implementations of the first aspect, the obtaining the gain coefficient of the target image includes: clustering image pixels of the target image based on pixel luminance and pixel locations in the target image, to obtain a plurality of image regions; classifying the plurality of image regions in the target image based on the pixel luminance, to obtain a first-type image region and a second-type image region, where luminance of the first-type image region is higher than luminance of the second-type image region; and configuring different gain coefficients for the first-type image region and the second-type image region, where a gain coefficient of the first-type image region is greater than a gain coefficient of the second-type image region.

For example, when the target image is divided into a plurality of image regions, pixels whose pixel luminance is close and whose spatial locations are close may be divided into one image region based on pixel luminance and spatial locations of pixels in the target image, to implement image region division. This is not limited to the foregoing clustering manner.

For example, the first-type image region may be referred to as a highlighted region, and the second-type image may be referred to as a non-highlighted region.

For example, to distinguish between the highlighted region and the non-highlighted region, the highlighted region and the non-highlighted region may be distinguished through comparison between an average luminance value of the image region with a preset threshold. This is not limited in this application.

In this way, the highlighted region in the target image may be brightened, and the non-highlighted region may be darkened, to implement display adaptation of the target image to the display with particular backlight luminance.

According to the first aspect or any one of the foregoing implementations of the first aspect, the processing the first display information and the second display information based on preset information of the target image, to obtain third display information of the target image includes: obtaining the preset information of the target image from source information of the to-be-displayed target image; and processing the first display information and the second display information based on the preset information, to obtain the third display information of the target image.

For example, the preset information may be carried in a bitstream and transmitted to an end corresponding to the image processing method, so that when backlight exists on the display, display adaptation of a video or an image on the display can be performed based on the preset information, and display effect is better.

The preset information is carried in the source information of the target image, so that the image display end can directly use the preset information to perform display adaptation of the image under backlight of the display, and the image display end does not need to generate the preset information, so that a display delay of an image or a video can be reduced.

According to a second aspect, an embodiment of this application provides an electronic device. The electronic device includes a memory and a processor. The memory is coupled to the processor. The memory stores program instructions. When the program instructions are executed by the processor, the electronic device is enabled to implement the method according to any one of the first aspect and the implementations of the first aspect.

The second aspect and any one of the implementations of the second aspect respectively correspond to the first aspect and any one of the implementations of the first aspect. For technical effects corresponding to the second aspect and any one of the implementations of the second aspect, refer to the technical effects corresponding to the first aspect and any one of the implementations of the first aspect. Details are not described herein again.

According to a third aspect, an embodiment of this application provides a chip. The chip includes one or more interface circuits and one or more processors. The interface circuit is configured to: receive a signal from a memory of an electronic device, and send the signal to the processor. The signal includes computer instructions stored in the memory. When the processor executes the computer instructions, the electronic device is enabled to perform the method according to any one of the first aspect and the implementations of the first aspect.

The third aspect and any one of the implementations of the third aspect respectively correspond to the first aspect and any one of the implementations of the first aspect. For technical effects corresponding to the third aspect and any one of the implementations of the third aspect, refer to the technical effects corresponding to the first aspect and any one of the implementations of the first aspect. Details are not described herein again.

According to a fourth aspect, an embodiment of this application provides a computer-readable storage medium. The computer-readable storage medium stores a computer program. When the computer program is run on a computer or a processor, the computer or the processor is enabled to perform the method according to the first aspect or any one of the possible implementations of the first aspect.

The fourth aspect and any one of the implementations of the fourth aspect respectively correspond to the first aspect and any one of the implementations of the first aspect. For technical effects corresponding to the fourth aspect and any one of the implementations of the fourth aspect, refer to the technical effects corresponding to the first aspect and any one of the implementations of the first aspect. Details are not described herein again.

According to a fifth aspect, an embodiment of this application provides a computer program product. The computer program product includes a software program, and when the software program is executed by a computer or a processor, the method according to the first aspect or any one of the possible implementations of the first aspect is performed.

The fifth aspect and any one of the implementations of the fifth aspect respectively correspond to the first aspect and any one of the implementations of the first aspect. For technical effects corresponding to the fifth aspect and any one of the implementations of the fifth aspect, refer to the technical effects corresponding to the first aspect and any one of the implementations of the first aspect. Details are not described herein again.

## BRIEF DESCRIPTION OF DRAWINGS

To describe the technical solutions in embodiments of this application more clearly, the following briefly describes the accompanying drawings used in describing embodiments of this application. It is clear that the accompanying drawings in the following descriptions show merely some embodiments of this application, and a person of ordinary skill in the art may still derive other drawings from these accompanying drawings without creative efforts.

FIG. 1 is an example of a diagram of an architecture of a system;
FIG. 2 is an example of a diagram of an architecture of a system application;
FIG. 3 is an example of a diagram of a mapping relationship in a dynamic range;
FIG. 4 is an example of a diagram of a scenario in which backlight luminance of a mobile phone is adjusted;
FIG. 5a is an example of a diagram of an architecture of a system;
FIG. 5b is an example of a diagram of an image processing process;
FIG. 5c is an example of a diagram of a data generation process;
FIG. 5d is an example of a diagram of an image display adaptation process;
FIG. 5e is an example of a diagram of a curve generation process;
FIG. 6a is an example of a diagram of an architecture of a system;
FIG. 6b is an example of a diagram of an image processing process;
FIG. 6c is an example of a diagram of an image display adaptation process;
FIG. 7 is a diagram of a structure of an apparatus according to an embodiment of this application; and
FIG. 8 is a diagram of a structure of a chip according to an embodiment of this application.

## DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects, and indicates that three relationships may exist. For example, A and/or B may represent: Only A exists, both A and B exist, and only B exists.

In the specification and claims in embodiments of this application, the terms "first", "second", and the like are intended to distinguish between different objects but are not used to describe a particular order of the objects. For example, a first target object, a second target object, and the like are intended to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units mean two or more processing units, and a plurality of systems mean two or more systems.

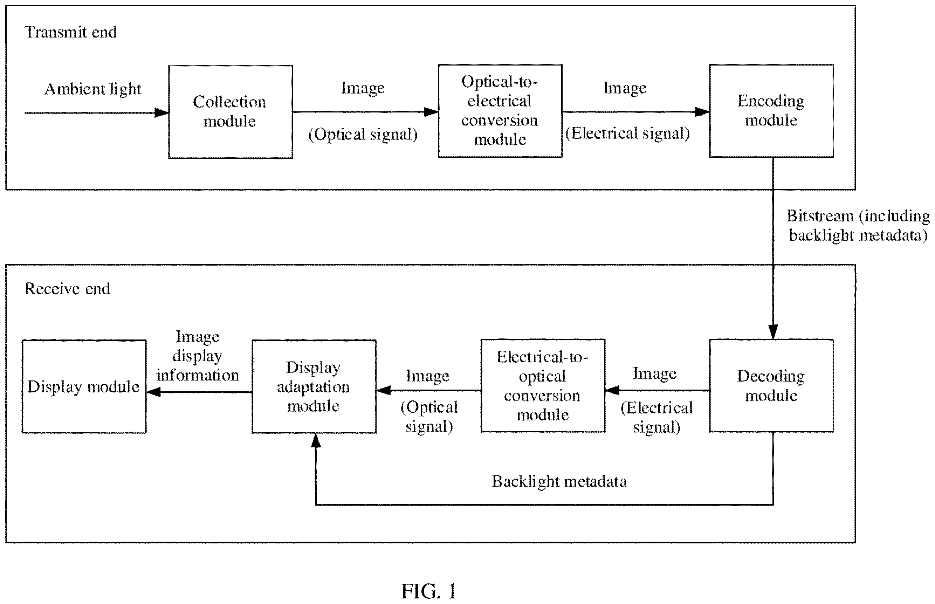

FIG. 1 is an example of a diagram of a structure of a system framework. The system in FIG. 1 includes a transmit end and a receive end.

It should be understood that the system shown in FIG. 1 is merely an example. The system in this application, and the transmit end and the receive end in the system may have more or fewer components than those shown in the figure, may combine two or more components, or may have different component configurations. The components shown in FIG. 1 may be implemented in hardware including one or more signal processors and/or application-specific integrated circuits, software, or a combination of hardware and software.

For example, the transmit end may be an image or video generation end, and the receive end may be an image or video display end.

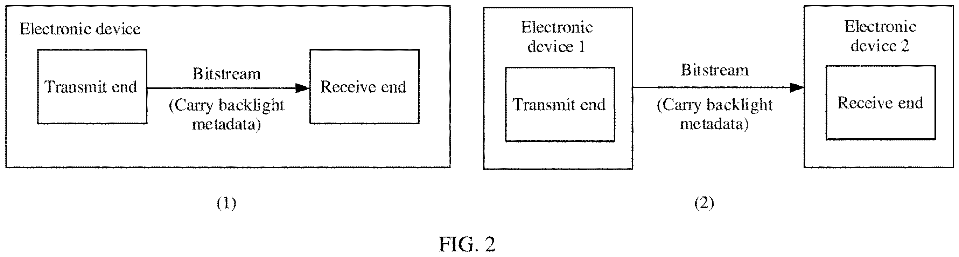

As shown in FIG. 2(1), the transmit end and the receive end may be configured in a same electronic device.

For example, the electronic device is a mobile phone, the transmit end may include a camera, and the receive end may include a display.

The transmit end may generate a bitstream based on video data collected by the camera, where the bitstream carries backlight metadata. The transmit end may send the bitstream to the display of the receive end for display.

For example, an application scenario of the system shown in FIG. 1 may be a process in which a user uses the camera of the mobile phone to shoot a video and displays the shot video on the display of the mobile phone.

For example, the transmit end may be integrated into an encoder, and the receive end may be integrated into a decoder.

As shown in FIG. 2(2), the transmit end and the receive end may be configured in different electronic devices.

For example, an electronic device 1 is a mobile phone, and an electronic device 2 is a television. The mobile phone may send, to the television in a manner such as by using a Wi-Fi network or through Bluetooth, a bitstream of video data shot by the mobile phone, and display the video data on a display of the television.

For example, the electronic device 1 is an electronic device used by a video software vendor to shoot and produce a video, the electronic device 1 may transmit a produced video bitstream (including backlight metadata) to an application server, and the electronic device 2 is a mobile phone. The mobile phone receives a user operation of a user on a video application installed on the mobile phone. The mobile phone may obtain, from the application server in response to the user operation, the video bitstream transmitted by the electronic device 1, and display and play video data on a display of the mobile phone.

It should be noted that the electronic device may be a terminal, or may be referred to as a terminal device. The terminal may be a device such as a cellular phone (cellular phone), a pad (pad), a wearable device, a television, a personal computer (PC, personal computer), or an Internet of Things device. This is not limited in this application.

In addition, an application scenario of this application is not limited to the foregoing example scenarios, and this application may be further applied to a plurality of scenarios, for example, a scenario of Huawei Cloud storage (or transmission) of an image (or a video), a video surveillance scenario, or a live broadcast scenario. This is not limited in this application.

The following describes a specific operating process of the system in FIG. 1 with reference to FIG. 1.

The transmit end may include a collection module, an optical-to-electrical conversion module, and an encoding module.

The collection module may collect ambient light, to obtain image data of an optical signal.

The optical-to-electrical conversion module may perform optical-to-electrical conversion on the image data of the optical signal according to an optical-to-electrical transfer function, to generate image data of an electrical signal.

The following describes the background of optical-to-electrical conversion performed by the optical-to-electrical conversion module.

For example, a dynamic range (Dynamic Range) may indicate a ratio of a maximum value to a minimum value of a variable. In a digital image, the dynamic range may indicate a ratio of a maximum grayscale value to a minimum grayscale value in an image displayable range.

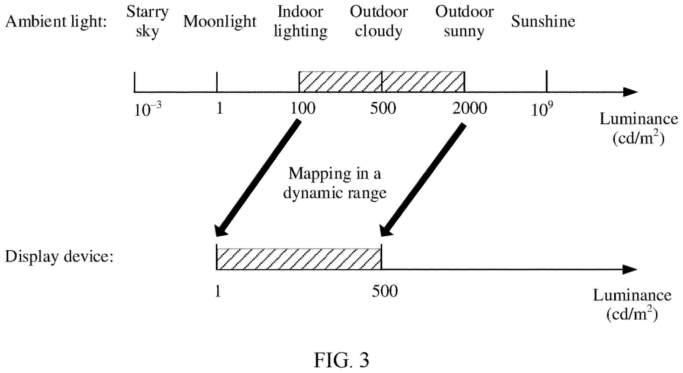

A dynamic range of nature is quite large. As shown in FIG. 3, luminance information of various ambient light is shown. For example, luminance of a night scene in the starry sky is approximately 0.001 $cd/m^2$, luminance of the sun itself reaches 1,000,000,000 $cd/m^2$, luminance of the moonlight is approximately 1 $cd/m^2$, luminance of ambient light in an indoor lighting scenario is approximately 100 $cd/m^2$, luminance of ambient light in an outdoor cloudy scenario is approximately 500 $cd/m^2$, and luminance of ambient light in an outdoor sunny scenario is approximately 2000 $cd/m^2$. In this case, the dynamic range of nature can reach the order of magnitude of $1,000,000,000/0.001=10^{13}$. However, in real scenarios of nature, luminance of the sun and luminance of the starlight are not obtained at the same time. For a natural scenario in the real world, the dynamic range is within a range of $10^{-3}$ to $10^6$.

However, in most current color digital images, each of RGB (Red Green Blue, red green blue) channels is separately stored by using 8 bits (bit) or 10 bits, that is, a representation range of each channel is a grayscale of 0 to 255, and 0 to 255 herein is a dynamic range of an image.

In this case, a dynamic range in a same scenario in the real world is within a range of $10^{-3}$ to $10^6$, which may be referred to as a high dynamic range (high dynamic range, HDR). On the contrary, a dynamic range on a common picture may be referred to as a low dynamic range (low dynamic range, LDR). As shown in FIG. 3, an imaging process of an electronic device (for example, a digital camera) may be understood as nonlinear mapping from a high dynamic range (for example, 100 cd/m² to 2000 cd/m²) of the real world to a low dynamic range (1 cd/m² to 500 cd/m²) of an image.

It should be noted that a range of mapping from luminance of ambient light to display luminance of a display device is not limited to an example of a mapping range of a shadow region in FIG. 3. As a display capability of the electronic device is improved, a range of luminance that can be displayed by the display device may be increased. For example, maximum display luminance may be greater than 500.

For example, the display device in FIG. 3 and in this specification may be an electronic device to which the receive end in this embodiment of this application belongs.

Based on the foregoing background, it can be learned with reference to FIG. 1 and FIG. 3 that, the dynamic range of the image data of the optical signal collected by the collection module is within the range of $10^{-3}$ to $10^6$, and the maximum display luminance of a display module of the receive end is only, for example, 500, and cannot reach luminance information of the ambient light in the real world. To browse an image by using the display device, the optical-to-electrical conversion module needs to convert the optical signal into the electrical signal by using the optical-to-electrical transfer function, to obtain an 8-bit or 10-bit image (a size of each pixel in the image is 8 bits or 10 bits).

For example, a standard dynamic range (standard dynamic range, SDR) image (an image whose dynamic range is generally between 1 nit and 100 nits, where nit is a light unit) corresponds to a high dynamic range (HDR) image (an image whose dynamic range is between 0.001 and 10000 nits). An 8-bit image in a conventional format such as JPEG may be considered as an SDR image.

It should be noted that an image format of an 8-bit or 10-bit image of the electrical signal may be any one of a RAW (unprocessed) image, an RGB image, a YUV ("Y" represents luminance (Luminance, Luma), and "U" and "V" represent chrominance and concentration (Chrominance, Chroma)) image, and a Lab image. This is not limited in this application.

The Lab image includes three elements. One element is luminance (L), and a and b are two color channels. a includes colors from dark green (a low luminance value) to gray (a medium luminance value) and then to bright pink (a high luminance value); and b includes bright blue (a low luminance value) to gray (a medium luminance value) and then to yellow (a high luminance value).

In addition, in this application, a size of each pixel in an image displayed by the display device is not limited to 8 bits or 10 bits. With improvement of a display capability of the display device, an image pixel may alternatively be displayed in a size greater than 10 bits.

The following describes the optical-to-electrical transfer function used by the optical-to-electrical transfer module in FIG. 1.

For example, an early display device may be a CRT display, and an optical-to-electrical transfer function of the CRT display is a Gamma function. The optical-to-electrical transfer function shown in formula (1) is defined in the ITU-R Recommendation BT. 1886 standard:

$$V = 1.099L^{0.45} - 0.099 \; for \; 1 \geq L \geq 0.018$$
$$V = 4.500 \; for \; 0.018 > L \geq 0$$

formula (1).

After optical-to-electrical conversion is performed on a collected optical signal based on formula (1), an obtained image that is quantized into an 8-bit image may be referred to as an SDR image. The SDR image and the optical-to-electrical transfer function in formula (1) perform well on a conventional display device (illuminance is approximately 100 cd/m²).

However, with the upgrade of the display device, an illuminance range of the display device increases continuously. Illuminance information of a common HDR display can be 600 cd/m², and illuminance information of an advanced HDR display can reach 2000 cd/m², which is far greater than the illuminance information of the SDR display device. The optical-to-electrical transfer function shown in formula (1) in the ITU-R Recommendation BT. 1886 standard cannot well express display performance of the HDR display device. Therefore, an improved electrical-to-optical transfer function is required to adapt to the upgrade of the display device. The idea of the optical-to-electrical transfer function is derived from a mapping function in a tone mapping (tone mapping, TM) algorithm. The optical-to-electrical transfer function is obtained by properly adjusting the mapping function. Currently, there are three common optical-to-electrical transfer functions: PQ (perception quantization, perception quantization), HLG (hybrid log-gamma, hybrid log-gamma), and SLF optical-to-electrical transfer functions. The three optical-to-electrical transfer functions are conversion functions specified in the AVS standard.

The following describes curves of the foregoing three optical-to-electrical transfer functions.

The PQ optical-to-electrical transfer function herein is different from the "Gamma" optical-to-electrical transfer function shown in the conventional formula (1), and a perception quantization transfer function may be proposed based on a luminance perception model of human eyes. The PQ optical-to-electrical transfer function represents a conversion relationship between a linear signal value of an image pixel and a nonlinear signal value of a PQ domain, as shown in formula (2), and the PQ optical-to-electrical transfer function may be expressed as formula (3):

$$\begin{cases} R^{'} = PQ\_TF(max(0, min(R/10000,1))) \\ G^{'} = PQ\_TF(max(0, min(G/10000,1))) \\ B^{'} = PQ\_TF(max(0, min(B/10000,1))) \end{cases} \quad \text{formula (2);}$$

and

$$L^{'} = PQ\_TF(L) = \left( \frac{c_1 + c_2 L^{m_1}}{1 + c_3 L^{m_1}} \right)^{m_2}, \text{ formula (3),}$$

where

L represents the linear signal value, and the value is normalized to [0, 1];

L' represents the non-linear signal value, and a range of the value is [0, 1];

$$m_1 = \frac{2610}{4096} \times \frac{1}{4} = 0.1593017578125 \ ,$$

which is a PQ optical-to-electrical transfer coefficient;

$$m_2 = \frac{2523}{4096} \times 128 = 78.84375 \ ,$$

which is a PQ optical-to-electrical transfer coefficient;

$$c_1 = c_3 - c_2 + 1 = \frac{3424}{4096} = 0.8359375 \ ,$$

which is a PQ optical-to-electrical transfer coefficient;

$$c_2 = \frac{2413}{4096} \times 32 = 18.8515625 \ ,$$

which is a PQ optical-to-electrical transfer coefficient; and

$$c_3 = \frac{2392}{4096} \times 32 = 18.6875 \ ,$$

which is a PQ optical-to-electrical transfer coefficient.

The HLG optical-to-electrical transfer function is obtained by improving a conventional Gamma curve. The HLG optical-to-electrical transfer function uses the conventional Gamma curve in a segment with small horizonal coordinates, and a log curve is added in a segment with large horizontal coordinates. The HLG optical-to-electrical transfer function indicates a conversion relationship between a linear signal value of an image pixel and a nonlinear signal value in an HLG domain, and the HLG optical-to-electrical transfer function may be expressed as formula (4):

$$L^{'} = HLG\_TF(L) = \begin{cases} \sqrt{L}/2, \ 0 \le L \le 1 \\ a\ln(L-b)+c, \ 1 < L \end{cases} \qquad \text{formula (4)},$$

where

L represents the linear signal value, and a range of the value is [0, 12];
L' represents the non-linear signal value, and a range of the value is [0, 1];
a=0.17883277, where a is an HLG optical-to-electrical transfer coefficient;
b=0.28466892, where b is an HLG optical-to-electrical transfer coefficient; and
c=0.55991073, where c is an HLG optical-to-electrical transfer coefficient.

The SLF optical-to-electrical transfer function is an optimal curve obtained based on luminance distribution in an HDR scene when optical characteristics of human eyes are satisfied.

An SLF optical-to-electrical transfer curve indicates a conversion relationship between a linear signal value of an image pixel and a nonlinear signal value in an SLF domain. The conversion relationship between the linear signal value of the image pixel and the nonlinear signal value in the SLF domain is expressed as formula (5):

$$\begin{cases} R^{`} = SLF\_TF(max(0, min(R/10000,1))) \\ G^{`} = SLF\_TF(max(0, min(G/10000,1))) \\ B^{`} = SLF\_TF(max(0, min(B/10000,1))) \end{cases} \qquad \text{formula (5)},$$

where the SLF optical-to-electrical transfer function may be expressed as formula (6):

$$L^{'} = SLF\_TF(L) = a \times \left( \frac{p \times L}{(p-1) \times L} \right)^{m} + b \qquad \text{formula (6)},$$

where

L represents the linear signal value, and the value is normalized to [0, 1];
L' represents the non-linear signal value, and a range of the value is [0, 1];
p=2.3, which is an SLF optical-to-electrical transfer coefficient;
m=0.14, which is an SLF optical-to-electrical transfer coefficient;
a=1. 12762, which is an SLF optical-to-electrical transfer coefficient; and
b=-0.12762, which is an SLF optical-to-electrical transfer coefficient.

Still with reference to FIG. 1, the encoding module of the transmit end may receive an electrical signal image generated by the optical-to-electrical conversion module, and encode the electrical signal image to generate a bitstream.

It should be noted that the bitstream generated by the transmit end in this application may carry backlight metadata. When generating an image or a video, the transmit end in this embodiment of this application may generate the backlight metadata for the image or the video.

For example, the backlight metadata may be attribute information of a video or an image.

The backlight metadata indicates metadata (metadata) related to display adaptation of an image when backlight of the display device changes.

Still with reference to FIG. 1, the transmit end may send the generated bitstream to the receive end.

For example, an image processed by the system shown in FIG. 1 in this embodiment of this application may be one frame of image, or may be a frame sequence (that is, a plurality of frames of images). This is not limited in this application.

Still with reference to FIG. 1, the receive end may include a decoding module, an electrical-to-optical conversion module, a display adaptation module, and a display module.

The decoding module may decode the bitstream, to obtain, for example, an 8-bit electrical signal image and attribute information (which may include backlight metadata) of the image.

An operation performed by the electrical-to-optical conversion module is an inverse process of an operation performed by the optical-to-electrical conversion module. That is, the electrical-to-optical conversion module may convert the received electrical signal image into an optical signal image corresponding to light intensity of ambient light of the image.

For example, a mapping method in the dynamic range may be applied to adaptation between an image (an HDR signal) generated by the transmit end and an HDR signal displayed by the display device to which the receive end belongs.

For example, when the transmit end generates an image, collected ambient light is a light signal of 4000 nits, but maximum display luminance (that is, an HDR display capability) of each pixel in the display device (for example, a television or a pad) to which the receive end belongs is only 500 nits. In this case, to display the light signal of 4000 nits on a display of the display device, tone mapping needs to be performed from image luminance to luminance of the display of the display device.

For another example, when the transmit end generates an image, an SDR signal of 100 nits is collected, but maximum display luminance of the display device (for example, a television) to which the receive end belongs is 2000 nits. In this case, to map the signal of 100 nits to the display device of 2000 nits for display, tone mapping also needs to be performed from image luminance to luminance of the display of the display device.

In a conventional technology, a bitstream generated by a transmit end does not include the backlight metadata in this embodiment of this application. Current tone mapping curves may include a sigmoidal curve-based adjustment process proposed by Dolby and a Bezier curve. Technologies of the two tone mapping curves correspond to the ST2094 standard. When a display pixel of an image is mapped to display luminance of the display pixel on a display, a maximum luminance value and a minimum luminance value of the image are usually aligned with a maximum display luminance value (that is, a display capability, for example, 500 nits) and a minimum display luminance value of the display. A luminance value between the maximum luminance value and the minimum luminance value of the image may be mapped to a range between the maximum display luminance and the minimum display luminance value of the display based on a global or local tone mapping curve (for example, the sigmoidal curve-based adjustment process and the Bezier curve).

However, in the foregoing tone mapping solution in the conventional technology, a backlight adjustable scenario of the display device is not considered.

For example, the display of the mobile phone may include backlight sources in an array, and the backlight sources may be used to light up a screen of the display. When a backlight intensity level is highest (for example, 100%), luminance of the display is maximum display luminance (for example, 500 nits) of the display, and the backlight intensity level may be described as a percentage of the maximum display luminance. In this case, a product of the backlight intensity level and the maximum display luminance may be current target backlight luminance of the display.

It should be noted that the maximum display luminance of the display device is not limited in this application, and may be continuously improved based on product upgrade of the display device. In addition, a layout manner of the backlight sources of the display device is not limited in this application, either, and backlight sources of different types of electronic devices (for example, a mobile phone and a television) may be disposed in different manners.

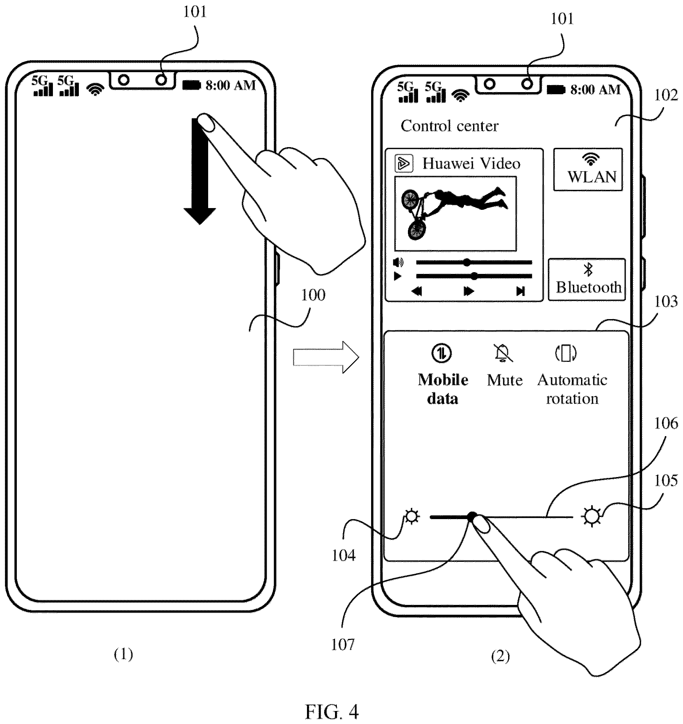

FIG. 4 is an example of a diagram of a scenario in which backlight luminance of a mobile phone is adjusted.

Example 1:

As shown in FIG. 4(1) and FIG. 4(2), the mobile phone may include an ambient light sensor 101. The ambient light sensor 101 may sense an ambient luminance value and identify an ambient luminance change value. The mobile phone may set a current target backlight luminance of a mobile phone screen based on the ambient light luminance value collected by the ambient light sensor 101, and adjust the current target backlight luminance based on an ambient luminance change collected by the ambient light sensor 101.

For example, the system may adjust backlight luminance of the mobile phone screen based on the luminance change of the ambient light. For example, backlight luminance set for the mobile phone in the daytime is higher than backlight luminance set for the mobile phone at night.

Example 2:

As shown in FIG. 4(1), the mobile phone displays an interface 100, and a user may perform, on the interface 100, a downward slide operation from a screen region close to a right side according to an arrow direction from the top of the screen.

The interface 100 is not limited in this application, and may be an application interface, an application icon interface, or the like.

The mobile phone may switch a display interface of the mobile phone from the interface 100 shown in FIG.

4(1) to a control center interface 102 shown in FIG. 4(2) in response to the slide operation of the user.

The control center interface 102 includes one or more controls, and an implementation of the control may include but is not limited to an icon, a button, a window, a layer, and the like.

As shown in FIG. 4(2), the control center interface 102 may include a "Huawei Video" playback window, a wireless network icon, a Bluetooth icon, and a window 103.

The window 103 may include a mobile data icon, a ringing/mute icon, and a screen auto-rotation icon.

In addition, the window 103 may further include a luminance progress bar control used to control backlight luminance of the mobile phone screen.

It should be noted that the window 103 may include more or fewer controls. This is not limited in this application.

The luminance progress bar control may include an icon 104, an icon 105, a progress bar 106, and a control 107.

The icon 104 indicates minimum backlight luminance, that is, the backlight intensity level is 0%.

The icon 105 indicates maximum backlight luminance, that is, the backlight intensity level is 100%. In this case, display luminance of the mobile phone screen is the maximum display luminance of the mobile phone screen (for example, the foregoing 500 nits).

A finger of the user moves the control 107 on the progress bar 106, and the mobile phone may adjust a current backlight intensity level of the mobile phone screen in response to a user operation, that is, adjust the backlight intensity level in a range of 0% to 100%, so as to change the current target backlight luminance of the mobile phone.

For example, the control 107 moves in a direction of the icon 105 on the progress bar 106, so as to increase the backlight intensity level of the mobile phone screen to increase the current target backlight luminance. The control 107 moves in a direction of the icon 104 on the progress bar 106, so as to decrease the backlight intensity level of the mobile phone screen to decrease the current target backlight luminance.

In this embodiment, the user may set the current target backlight luminance of the mobile phone screen based on a use requirement and an actual mobile phone use situation.

It should be noted that an interface provided by the mobile phone for the user to manually adjust the current target backlight luminance of the screen is not limited to FIG. 4(2), and the backlight luminance may alternatively be adjusted by using another interface.

In this case, in a scenario in which the screen backlight luminance is adjustable, final display luminance of the screen may be a result of a joint action of a current target backlight luminance value and a screen display value. During backlight luminance adjustment, a screen luminance range changes accordingly.

For example, an OLED screen is self-luminous. During backlight control, luminance of an excitation light source of each pixel in the OLED screen may be directly controlled, and a backlight intensity may indicate an overall change of the screen display value.

For example, in a scenario in which backlight of the mobile phone is adjustable, for example, if the maximum display luminance (that is, the display capability) of the mobile phone screen is 500 nits, and the backlight intensity level is 10%, the current target backlight luminance is 50 nits. However, because the maximum display luminance of the mobile phone screen can reach 500 nits, when the current target backlight luminance is 50 nits, actual luminance (current backlight luminance, that is, actual backlight luminance) of the screen may be higher than 50 nits, for example, 60 nits, or 100 nits. A strategy may exist to configure the actual luminance of the screen.

Therefore, based on the foregoing description that the backlight luminance of the display of the electronic device is adjustable, it can be found that, no matter in the global tone mapping solution or in the local tone mapping solution in the conventional technology, the following is not considered: At particular backlight intensity, the final display luminance of the screen may be increased from the current target backlight luminance (for example, the foregoing 50 nits) to the luminance (that is, the foregoing maximum display luminance, for example, 100 nits) until an actual backlight highest level of a single pixel or some pixels of the screen is reached. In this case, in the solution of the conventional technology, a mechanism in which only a maximum luminance value and a minimum luminance value of an image are aligned with a maximum luminance value and a minimum luminance value of a screen is not adapted to display adaptation in a case in which backlight is weakened (that is, the backlight is weakened from strongest backlight, and a backlight intensity level starts to decrease from 100%). Consequently, a contrast of a video or an image displayed by an electronic device is low, and a color is dark.

Therefore, this application provides the foregoing system. Still with reference to FIG. 1, the bitstream sent by the transmit end in the system may carry the backlight metadata, and the display adaptation module of the receive end may perform dynamic range mapping on an optical signal image based on the backlight metadata, to obtain image display information and send the image display information to the display module.

A CPU of the receive end may control a circuit of the display module based on the image display information, to generate light of corresponding luminance by using pixels in the display module, so as to implement adaptation between an image (a high HDR signal) generated by the transmit end and a low HDR signal displayed by the display device to which the receive end belongs.

In the system in this embodiment of this application, an image can be adaptively displayed on the display device in a scenario in which backlight is adjustable.

Embodiment 1:

For the backlight metadata carried in the bitstream in FIG. 1, in Embodiment 1, the backlight metadata may include a local or global initial gain adjustment curve and a local or global anchor.

"Global" may indicate one frame of image or a frame sequence.

"Local" may indicate an image region in one frame of image, an image scene, or the like.

The backlight metadata may include at least one of the following data: a local initial gain adjustment curve and a local anchor; a global initial gain adjustment curve and a global anchor; a global initial gain adjustment curve and a local anchor; or a local initial gain adjustment curve and a global anchor.

The anchor in this specification is a luminance value.

The local anchor of a local image may be a luminance value that is less than a maximum pixel luminance value of the local image (for example, an image region) and greater than a minimum pixel luminance value of the local image.

The global anchor, namely, a backlight control anchor, is a luminance value that is less than a maximum global (for example, one frame of image) pixel luminance and greater than a minimum global pixel luminance.

When an initial gain adjustment curve is generated for a local or global image, a tone mapping curve may be generated in the manner in the conventional technology, and used as the initial gain adjustment curve of the image. This is not limited in this application.

For example, the tone mapping curve has various forms, including but not limited to: Sigmoid, a cubic spline, gamma, and a segmented cubic spline function, each of which may be used as the initial gain adjustment curve.

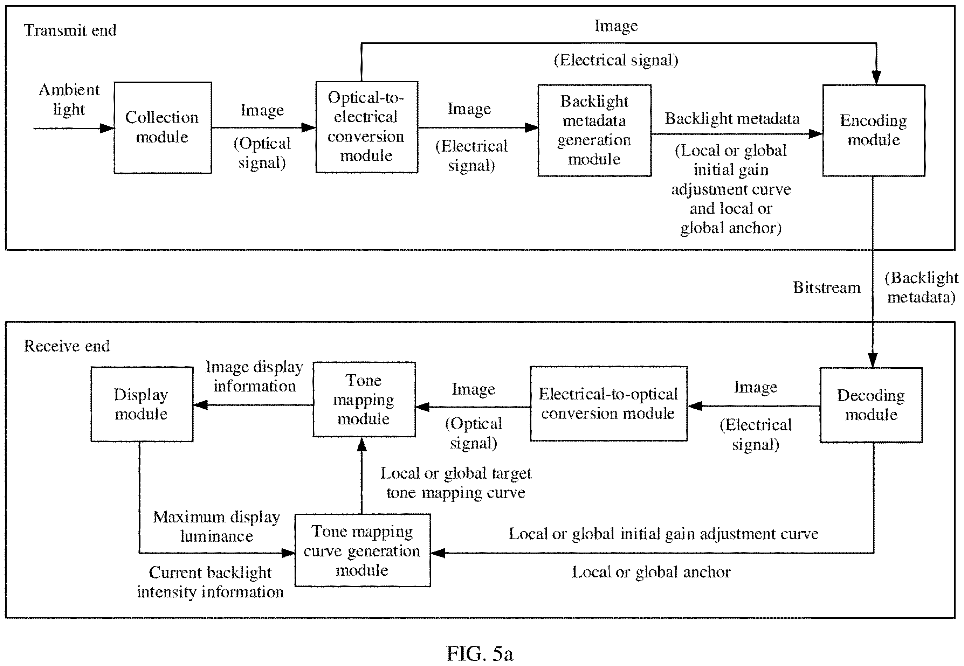

FIG. 5a is an example of a diagram of a system architecture obtained after FIG. 1 is refined. Similarities between FIG. 5a and FIG. 1 are not described herein again, and only refined parts are described in detail.

It should be understood that the system shown in FIG. 5a is merely an example. The system in this application, and the transmit end and the receive end in the system may have more or fewer components than those shown in the figure, may combine two or more components, or may have different component configurations. The components shown in FIG. 5a may be implemented in hardware including one or more signal processors and/or application-specific integrated circuits, software, or a combination of hardware and software.

As shown in FIG. 5a, the transmit end may include a backlight metadata generation module.

The backlight metadata generation module may generate backlight metadata based on an electrical signal image or an image sequence generated by the optical-to-electrical conversion module. The backlight metadata herein may include the local or global initial gain adjustment curve and the local or global anchor (for a specific definition, refer to the foregoing description, and details are not described herein again).

The encoding module may encode the electrical signal image and the backlight metadata, generate a bitstream, and send the bitstream to the receive end.

The following describes a process in which the backlight metadata generation module generates the local or global initial gain adjustment curve and the local or global anchor.

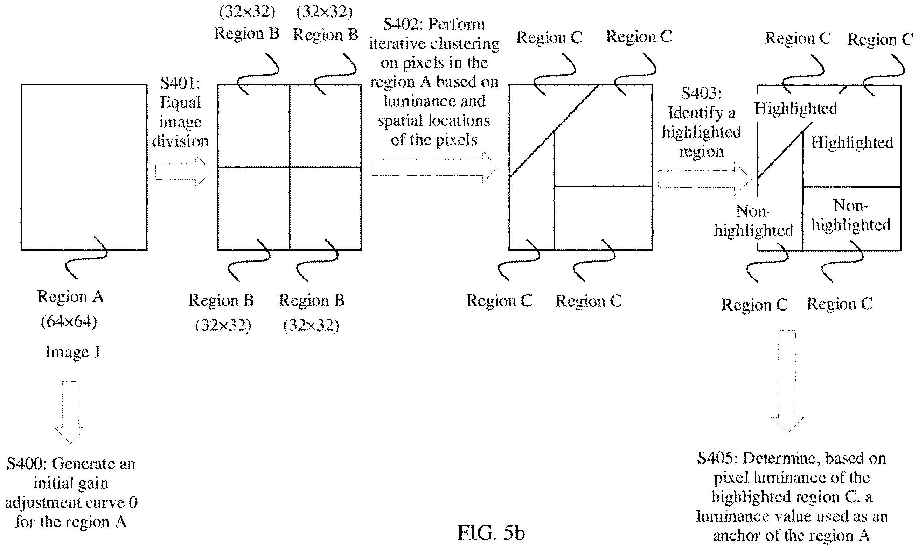

With reference to FIG. 5a and FIG. 5b, an example of a process of generating an initial gain adjustment curve 0 and an anchor for a region A of an image 1 is shown. In FIG. 5b, an example in which a processing object is the image 1 is used for description.

In FIG. 5b, the backlight metadata generation module may divide pixels whose luminance is close and whose spatial locations are close of the to-be-displayed image 1 into a same region, to perform regional division on the image 1, so as to obtain a plurality of regions C; and then identify a highlighted region C in the plurality of regions C.

It should be noted that, when regional division is performed on the image 1, a division method is not limited to the example in FIG. 5b, and pixels that are in an image and whose luminance is close and whose spatial locations are close may alternatively be divided into one region in another manner, to implement regional division of the image.

For example, the process in FIG. 5b may include the following steps.

Optionally, first regional division is performed on the image 1.

For example, the image 1 may be divided into one region (that is, regional division is not performed). In FIG. 5b, the image 1 is the region A.

Alternatively, for example, the image 1 is divided into a plurality of rectangular regions, to obtain a plurality of regions A.

S400: The backlight metadata generation module may generate the initial gain adjustment curve 0 for the region A.

For example, the image 1 is a $64 \times 64$ image.

The initial gain adjustment curve 0 may be generated in any manner of generating a tone mapping curve in the conventional technology. This is not limited in this application.

When the initial gain adjustment curve in the backlight metadata includes the local initial gain adjustment curve, an initial gain adjustment curve of an image region may be generated for the image region based on the foregoing method.

When the initial gain adjustment curve in the backlight metadata includes the global initial gain adjustment curve, and the "global" means one frame of image, an initial gain adjustment curve may be generated for one frame of image. When the "global" means a frame sequence, an initial gain adjustment curve may be generated for one frame of image in the frame sequence, and the initial gain adjustment curve is used as an initial gain adjustment curve of the frame sequence.

S401: The backlight metadata generation module performs equal image division on the region A, to generate regions B.

For example, the region A may be divided into four equally divided regions B, and a size of each region B is 32×32.

It should be noted that the image may be equally divided or may not be equally divided. This is not limited in this application.

Herein, the region A is divided into the four regions B. This is equivalent to performing initial clustering on pixels in the region A. For example, the four regions B may be respectively referred to as a type 0, a type 1, a type 2, and a type 3.

S402: The backlight metadata generation module performs iterative clustering on the pixels in the region A based on luminance and spatial locations of the pixels.

In this step, iteratively updated clustering may be performed on pixels in the four regions B in the region A, to cluster pixels that are in the region A and whose luminance is close and whose spatial locations are close into one type, so as to form four new cluster types, which are respectively four regions C in FIG. 5b. For example, the four regions C may be referred to as a type 0', a type 1', a type 2', and a type 3'.

For example, for each region B in one region A, in the first step, a cluster center location (x_centra, y_centra) of each region B and an average color value (for example, an average value of three channels RGB: R_avg, G_avg, and B_avg), or an average value (l_avg, a_avg, and b_avg) of Lab may be calculated. The cluster center location herein may be a geometric center of pixels in the region B.

Then, in the second step, for each pixel (coordinates (x, y), and a color value RGB or lab) in one region A, a geometric distance between the pixel and a cluster center location of each region B in the region A and a color difference between the color of the pixel and a color of a pixel at the cluster center location are calculated and are used as a distortion value cost of the pixel in the region A:

$$\text{cost} = (\sqrt{((x-x\_centra)^2 + (y-y\_centra)^2)})/K + (\sqrt{((l-l\_avg)^2 + (a-a\_avg)^2 + (b-b\_avg)^2)})/M,$$

where

$\sqrt{}$ represents a root extraction operation, K and M are two constants, and K and M are used for normalization.

For example, in FIG. 5b, one region A may include four regions B, and four distortion values may be obtained for one pixel in the region A.

Then, in the third step, for the four distortion values of each pixel in the region A, a region B corresponding to the smallest distortion value is selected as an updated cluster type (for example, the type 0) of the pixel. In this way, iterative clustering may be implemented for all pixels in the region A at a time.

In this way, for all the pixels in the region A, an updated cluster type may be obtained through calculation. This is equivalent to performing regional division on the region A again. Four regions B' obtained through current division are different from the four regions in the shape of a regular rectangle shown in FIG. 5b, and shapes of the four regions obtained through current division may be irregular.

Then, based on the procedures of the foregoing first step to third step, cluster center locations, average color values, and the like are recalculated for pixels in regions corresponding to the four updated cluster types, to perform a next round of iterative clustering, until a cluster type of a pixel in the region A no longer changes, and the four regions C shown in FIG. 5b may be obtained (as four final cluster types).

In this way, each region A in the image 1 may be divided into four regions C.

It should be noted that, a quantity of final regions C generated when the region A is divided is not limited to 4. For example, when an image is equally divided in S401, a manner of equal division by any quantity such as 6 or 9 may alternatively be performed, so that a quantity of regions C obtained by dividing the region A may be 6, 9, or the like.

It should be noted that, in the to-be-displayed image 1, the method in which pixels whose luminance is close and whose spatial locations are close are divided into a same region, to perform regional division on the image 1 is not limited to the foregoing example solution. The regional division on the image 1 may alternatively be implemented by using another method in the art.

S403: The backlight metadata generation module identifies a highlighted region from divided regions of the image by using a preset algorithm.

In a possible implementation, for example, the backlight metadata generation module may perform filtering processing on the image 1 (for example, including the four regions C shown in FIG. 5b) by using a bilateral filtering method or a guided filtering method, and use, based on a difference between pixel values of a same pixel in the image 1 before and after filtering, a pixel with a large difference in pixel values in the image as a highlighted pixel. Then, based on the four regions C obtained by dividing the image 1, a region C that includes highlighted pixels whose quantity is greater than or equal to a preset threshold is used as a highlighted region C, and a region C that includes highlighted pixels whose quantity is less than the preset threshold is used as a non-highlighted region C. In this way, regions included in the image 1 may be divided into two types of regions: one type is a highlighted region, and the other type is a non-highlighted region.

For example, as shown in FIG. 5b, the four regions C of the region A include two highlighted regions C and two non-highlighted regions C.

For example, an attribute of a corresponding photographed object in the image 1 may affect whether the image region is a highlighted region. For example, a cloud layer or glass has high reflectivity, and an image region of the cloud layer or glass is easily used as a highlighted region. For another example, an image region of an object with low reflectivity, such as rough cotton and linen clothing, is easily used as a non-highlighted region.

It should be noted that, a method for identifying which regions in the divided regions of the image belong to the highlighted region and which regions belong to the non-highlighted region is not limited to the foregoing bilateral filtering or guided filtering method, and may alternatively be another method. For example, an average luminance value of pixels is separately calculated for different regions C in the region A, and a region C whose average luminance value is greater than a preset threshold is used as the highlighted region C, so as to classify the highlighted region and the non-highlighted region of the region A. This is not limited in this application.

In addition, it should be noted that when the image 1 is divided into a plurality of regions A, for different regions A, a highlighted region and a non-highlighted region in each region A may be implemented in same or different implementations. This is not limited in this application.

S405: The backlight metadata generation module determines, based on pixel luminance of the highlighted region C in the region A, a luminance value used as an anchor of the region A.

For example, for one region A, a minimum value a1 of pixel luminance and an average value a2 of the pixel luminance may be obtained for pixels in all highlighted regions C in the region A. For one region A, an anchor of the region A is generated based on the minimum value a1 of the pixel luminance and the average value a2 of the pixel luminance.

For example, any luminance value that is greater than a1 and less than a2 may be used as an anchor of the region A.

For example, an average value of a1 and a2 may alternatively be used as an anchor of the region A.

For example, a weighting result of a1 and a2 may alternatively be used as an anchor of the region A.

One region A has one anchor.

Optionally, for one region A, a minimum value a1 of pixel luminance and an average value a2 of the pixel luminance may alternatively be obtained for pixels in all regions C in the region A (that is, all pixels in the region A). For one region A, the anchor of the region A is generated based on the minimum value a1 of the pixel luminance and the average value a2 of the pixel luminance.

It should be noted that a manner of generating the anchor in this application is not limited to the method in the foregoing embodiment, and the anchor may alternatively be generated in another manner. This is not limited in this application.

Therefore, based on the method in the foregoing embodiment, a global anchor of one frame of image may be generated for the frame of image, and a local anchor may also be generated for a region in the image. In addition, when the global anchor in the backlight metadata is an anchor of a frame sequence, an anchor may be generated for one frame of image by using the foregoing method, and then the anchor is used as an anchor of a frame sequence including the frame image.

FIG. 5b describes the process of generating the initial gain adjustment curve and the anchor in an implementation.

In another implementation, a local or global initial gain adjustment curve and a local or global anchor may alternatively be generated based on procedures in FIG. Sc(1).

As shown in FIG. Sc(1), the process may include the following procedures.

For example, FIG. Sc(1) may be performed by the backlight metadata generation module in FIG. 5a. The region A in FIG. Sc(1) may be one frame of image, or may be a local image region in the image. This is not limited in this application.

S501: Generate the initial gain adjustment curve 0 for the region A.

This process is similar to S400 in FIG. 5b, and details are not described herein again.

S502: Generate a cumulative distribution histogram of luminance of pixels of the region A based on luminance values of the pixels of the region A.

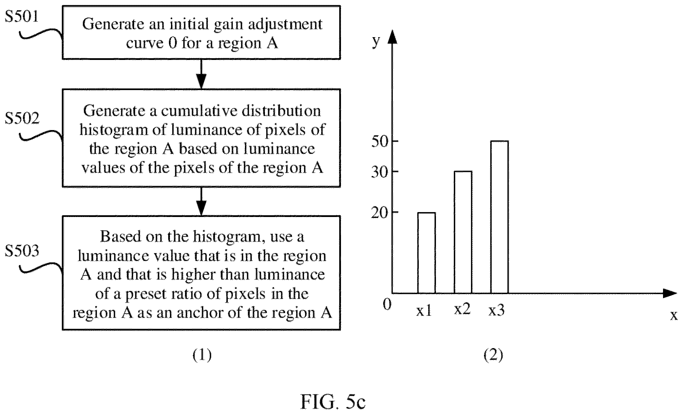

For example, FIG. 5c(2) shows the cumulative distribution histogram of the luminance of the pixels in the region A.

In the histogram, a horizontal axis x represents a luminance value of a pixel in the region A, and a vertical axis y represents a quantity of pixels in the region A.

It can be learned from FIG. 5c(2) that, for example, the region A includes 100 pixels, a quantity of pixels having luminance x1 in the region A is 20, a quantity of pixels having luminance x2 is 30, and a quantity of pixels having luminance x3 is 50.

S503: Based on the histogram, use a luminance value that is in the region A and that is higher than luminance of a preset ratio of pixels in the region A as an anchor of the region A.

For example, the preset ratio may be 95%, 99%, 99.5%, or the like. The preset ratio is greater than 50%. A specific value may be flexibly configured based on a requirement. This is not limited in this application.

For example, the preset ratio is 95%. Based on the histogram shown in FIG. 5c(2), it may be easily determined that the luminance value that is in the region A and that is higher than luminance of 95% of pixels in the region A is x3, and x3 may be used as the anchor of the region A.

In an implementation of FIG. 5c, when a local or global anchor is generated for an image, regional division does not need to be performed on the image, and the required anchor can be determined only based on a cumulative distribution histogram of luminance of pixels of the image. Considering that when tone mapping is performed on an image, luminance of a pixel whose luminance is higher than the anchor needs to be increased, and luminance of a pixel whose luminance is lower than the anchor needs to be decreased, it may be determined, based on the preset ratio, that luminance of the preset ratio of pixels needs to be decreased, and luminance of (1-preset ratio) of pixels needs to be increased, and brightening and darkening amplitudes are easily determined.

It should be noted that, generating an initial gain adjustment curve and generating an anchor for an image, a local image, or a frame sequence are two independent processes. An execution sequence of the two processes is not limited in this application.

It should be noted that S503 is performed after S502. However, a sequence of performing S501 and S502 and S503 is not limited in this application.

In the foregoing implementation, an example in which the transmit end in FIG. 5a generates a local or global initial gain adjustment curve and a local or global anchor is used for description, so that information about the curve and the anchor can be transmitted to the receive end as an attribute of the bitstream.

It should be noted that the receive end in this embodiment of this application may also include a backlight metadata generation module to perform the foregoing operations, to generate a local or global initial gain adjustment curve and a local or global anchor. A method is similar, and details are not described herein again.

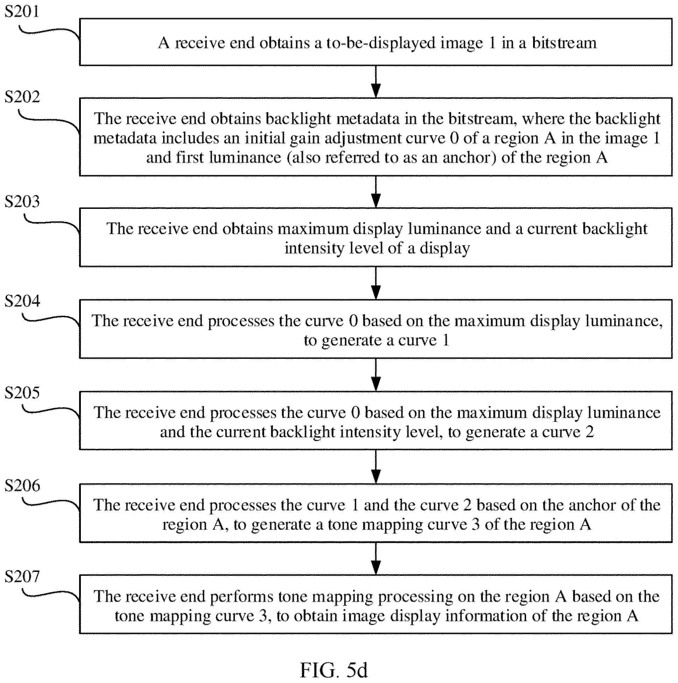

Continue to return to FIG. 5a. The following describes an execution process of the receive end in FIG. 5a with reference to FIG. 5d.

It can be learned through comparison between FIG. 1 and FIG. 5a that the display adaptation module in FIG. 1 may include a tone mapping curve generation module and a tone mapping module shown in FIG. 5a.

With reference to FIG. 5d, the following describes an operating process of the tone mapping curve generation module and the tone mapping module in FIG. 5a.

As shown in FIG. 5d, the process may include the following steps.

S201: The receive end obtains the to-be-displayed image 1 in the bitstream.

For example, as shown in FIG. 5a, the decoding module may obtain a picture, for example, the picture 1 in FIG. 5b, by decoding the bitstream.

S202: The receive end obtains the backlight metadata in the bitstream, where the backlight metadata includes the initial gain adjustment curve 0 of the region A in the image 1 and first luminance (also referred to as an anchor) of the region A.

For example, as shown in FIG. 5a, the decoding module may decode the bitstream, to obtain the backlight metadata, where the backlight metadata may include a local or global initial gain adjustment curve and a local or global anchor of the bitstream.

For example, the image 1 in FIG. 5b is the to-be-displayed image in the bitstream. The decoding module may obtain the initial gain adjustment curve of the region A and the anchor of the region A in the image 1, and send the initial gain adjustment curve and the anchor of the region A to the tone mapping curve generation module.

S203: The receive end obtains the maximum display luminance and the current backlight intensity level of the display.

For example, as shown in FIG. 5a, the tone mapping curve generation module may obtain the maximum display luminance of the display and current backlight intensity information of the display from the display module.

For example, the current backlight intensity information may be the current backlight intensity level, or may be current target backlight luminance.

For example, the receive end may obtain the maximum display luminance (for example, 500 nits) of the display from the display device to which the receive end belongs.

For example, in this embodiment of this application, a test sample (a test image) may be further displayed on the display of the display device. A region that accounts for N% (for example, 5% or 10%) of an area of the test sample and that is in the test sample is white, and the other region is black. Luminance of the white region with the N% of the area is measured by using an instrument, and the luminance obtained through measurement is the maximum display luminance of the display.

It should be noted that a manner of obtaining the maximum display luminance of the display device is not limited in this application.

In addition, based on the descriptions of the embodiment in FIG. 4, the current backlight intensity information that is of the display and that is obtained by the tone mapping curve generation module may be the current target backlight luminance that is of the display and that is obtained after automatic adjustment by the system, or may be the current target backlight luminance that is of the display and that is obtained after manual adjustment by the user. Details are not described herein again.

S204: The receive end processes the curve 0 based on the maximum display luminance, to generate a curve 1.

It should be noted that, when the curve 0 of the region A is processed to generate the curve 1, a luminance value based on which processing is performed is not limited to the maximum display luminance. The luminance value may be a luminance value that is greater than the current target backlight luminance and less than or equal to the maximum display luminance of the display (for example, a weighting result of the current target backlight luminance and the maximum display luminance).

For example, an example in which the curve 0 is processed based on the maximum display luminance to generate the curve 1 is used for description. When the luminance value based on which processing is performed is not the maximum display luminance, the method is similar, and details are not described herein again.

The curve 0 may be any tone mapping curve in the conventional technology. In this case, the curve 1 and a subsequent curve 2 are also tone mapping curves. An independent variable x of a function f(x) of any tone mapping curve represents a luminance value of an image pixel of an SDR source or an HDR source, and f(x) represents a luminance value of an image pixel displayed on the display.

For example, as shown in FIG. 5a, the tone mapping curve generation module may process, for example, the initial gain adjustment curve (for example, the curve 0, also referred to as the curve 0) of the region A based on the maximum display luminance maxT, to generate an updated gain adjustment curve (for example, the curve 1, also referred to as the curve 1).

For example, scaling processing may be performed on the curve 0 of the region A based on the maximum display luminance, to obtain the curve 1. It should be noted that a processing manner is not limited to the scaling processing described in manner 1 and manner 2, and may further include manner 3, manner 4, manner 5, and other manners that are not listed. This is not limited in this application.

Manner 1:

For example, if a maximum value of x of the curve 0 is maxsource, and a corresponding value of y is maxY, an overall scaling factor of the curve 0 is D=maxT/maxY, where maxT is the maximum display luminance of the display of the display device to which the receive end belongs. The curve 0 may be scaled as a whole based on the scaling factor D, and curve 1=D*curve 0.

The curve 0 is the initial gain adjustment curve (a tone mapping curve) of the region A. In this case, the maximum value of x of the curve 0 represents a maximum luminance value of an image pixel of the region A herein, and the corresponding value of y (that is, maxY) represents a luminance value that is of the image pixel that has the maximum luminance value in the region A and that is displayed on the display. In this case, the maximum value of x of the curve 0 is the maximum luminance value of the image pixel in the region A.

Manner 2:

The backlight metadata may include a preset luminance value T3.

For example, the preset luminance value T3 is any target luminance target_maxdisplay originally generated by the curve 0, where the target luminance is also a luminance value of an image pixel that has particular luminance and that is displayed on the display, for example, may be a maximum display luminance value.

The overall scaling factor of the curve 0 is D=maxT/T3. The curve 0 is scaled as a whole based on the scaling factor D, where curve 1=D*curve 0.

Considering that when the display has particular backlight, actual luminance of the display may be higher than the backlight luminance. For example, if the maximum display luminance of the display is 500 nits, and the backlight intensity level is 10%, the backlight luminance is 50 nits. However, the electronic device may have a strategy to adjust final luminance of the display, so that the final luminance may be higher than 50 nits. Therefore, in this embodiment, a tone mapping curve (that is, the curve 1) that matches the luminance value may be generated based on a luminance value that is greater than the backlight luminance and less than or equal to the maximum display luminance.

Manner 3:

A curve A is obtained based on an image parameter and display luminance of the region A.

For example, the image parameter includes but is not limited to a maximum luminance value of a pixel, a minimum luminance value of a pixel, or an average luminance value of a pixel.

For example, the display luminance may include the maximum display luminance or the current target backlight luminance of the display.

The image parameter and the display luminance are used as curve parameters of a conventional tone mapping curve, so as to obtain the curve A.

A weight value w is obtained based on the maximum display luminance and the target luminance target_maxdisplay.

For example, a difference between the maximum display luminance and the target luminance target_maxdisplay may be used as the weight value w, but a manner of obtaining the weight value w is not limited thereto.

Weighted summation is performed on the curve A and the curve 0 that is of the region A based on the weight value w, to obtain the curve 1.

Manner 4:

A curve parameter adjustment value B1 is obtained based on the maximum display luminance and a curve adjustment parameter B.

For example, the backlight metadata may include each curve parameter that indicates the curve 0, and the curve adjustment parameter B herein.

For example, a value of the curve adjustment parameter B is 0.2.

For example, the maximum display luminance of the display is 200, and the maximum display luminance that is of the display and that corresponds to the curve 0 is 500.

In this case, 1(200-500)1/100=3, and the curve parameter adjustment value B1 obtained by multiplying the curve adjustment parameter B (0.2 herein) by the foregoing result "3" is 0.6.

The curve 1 is obtained by superimposing the curve parameter adjustment value B1 based on the curve 0.

The curve parameter adjustment value B1 is superimposed (for example, an addition or subtraction operation) on each curve parameter of the curve 0, so as to obtain each curve parameter of the curve 1, and further obtain the curve 1.

To be specific, each curve parameter of the curve 0 may be added or subtracted by 0.6, so as to obtain a new group of curve parameters, thereby obtaining the curve 1.

Manner 5:

The curve parameter adjustment value B1 is obtained based on the maximum display luminance and the curve adjustment parameter B.

For example, in manner 4, each curve parameter of the curve 0 is adjusted based on the curve parameter adjustment value B1. Herein, for example, if a target parameter in the curve 0 has greatest impact on a curve shape, the backlight metadata may include the curve adjustment parameter B of the target parameter of the curve 0. To be specific, only the target parameter of the curve 0 is adjusted in manner 4.

The curve 0 is scaled in the foregoing manner 1 or manner 2, to obtain a curve 00.

Herein, during scaling, scaling processing may be performed on a parameter of the curve 0 other than the foregoing target parameter, to obtain the curve 00.

The curve 1 is obtained by superimposing B1 based on the curve 00.

For example, the new curve 1 may be obtained by adding or subtracting B1 to/from a target parameter of the curve 00.

S205: The receive end processes the curve 0 based on the maximum display luminance and the current backlight intensity level, to generate the curve 2.

For example, as shown in FIG. 5a, the tone mapping curve generation module may process, for example, the initial gain adjustment curve (the curve 0) of the region A based on the current backlight intensity information (for example, the current backlight intensity level) and the maximum display luminance maxT, to generate an updated gain adjustment curve (for example, the curve 2, also referred to as the curve 2).

If the current backlight intensity information obtained by the tone mapping curve generation module is current target backlight luminance information, the curve 2 does not need to be generated based on the maximum display luminance of the display module.

For example, a product of the maximum display luminance maxT and the current backlight intensity level Level (that is, the current target backlight luminance $L_x$=maxT*Level) may be used. For example, if the maximum display luminance is 500 and the current backlight intensity level is 10%, the current target backlight luminance is 50, and scaling processing is performed on the curve 0 of the region A, to obtain the curve 1. It should be noted that a processing manner is not limited to scaling, and may further include other manners. This is not limited in this application.

Manner 1:

For example, if the maximum value of x of the curve 0 of the region A is maxsource, and the corresponding value of y is maxY, the overall scaling factor of the curve 0 is $D = L_x/maxY$. The curve 0 is scaled as a whole based on the scaling factor D, where curve 2=D*curve 0.

Manner 2:

The backlight metadata may include the preset luminance value T3.
For example, the preset luminance value T3 is the target luminance target_maxdisplay originally generated by the curve 0.
The overall scaling factor of the curve 0 is $D = L_x/T3$. The curve 0 is scaled as a whole based on the scaling factor D, where curve 2=D*curve 0.
When the display has particular backlight, for example, the maximum display luminance of the display is 500 nits, and the backlight intensity level is 10%, the backlight luminance is 50 nits. In this embodiment, a tone mapping curve (that is, the curve 2) that matches the backlight luminance may be generated.
For a processing manner other than scaling, refer to manner 3 to manner 5 described in the example in S205. A principle is similar, and details are not described herein again.
S206: The receive end processes the curve 1 and the curve 2 based on the anchor of the region A, to generate a tone mapping curve 3 of the region A.

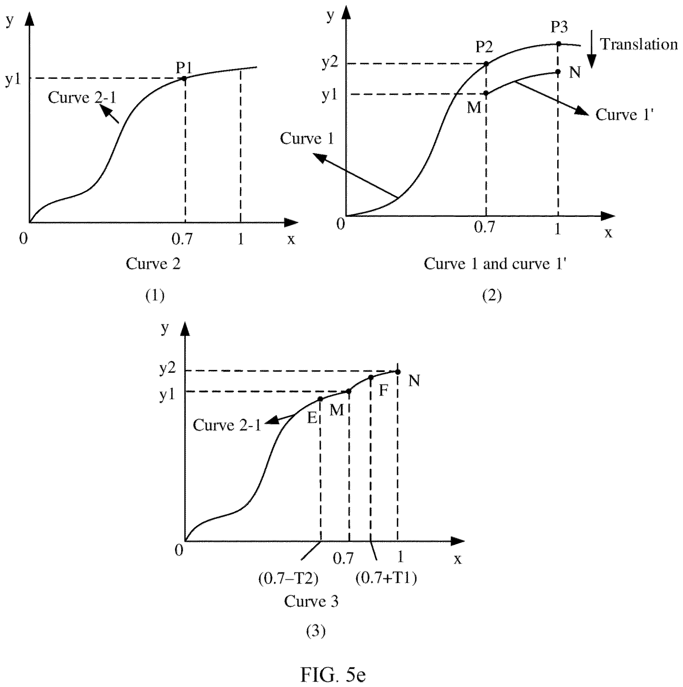

FIG. 5e is an example of a diagram of generating the curve 3 based on the curve 1 and the curve 2.
In three coordinate diagrams in FIG. 5e, each x-axis represents a luminance value of an image pixel of the region A herein, and a y-axis represents a luminance value of the image pixel that is of the region A and that is displayed on the display.
An example in which a value range of x of each tone mapping curve in FIG. 5e is 0 to 1 is used for description, and an example in which the anchor of the region A is 0.7 is used for description.
With reference to a curve diagram of the curve 2 shown in FIG. Se(1), because the curve 2 is a tone mapping curve generated based on the current target backlight luminance, most tone mapping values in the curve 2, that is, display luminance values (that is, values of y) obtained by mapping luminance values of image pixels are appropriate, and a few tone mapping values are inappropriate. Therefore, based on the anchor, a part of the tone mapping curve may be first cut from the curve 2, and then curve splicing is performed based on the curve 1, to generate a final tone mapping curve (that is, the curve 3, also referred to as the curve 3) of the region A.
As shown in FIG. Se(1), a value of y corresponding to the anchor 0.7 is y1, and the curve 2 may be cut from an origin (0, 0) to P1 (0.7, y1), to obtain a curve 2-1. In other words, for the final tone mapping curve, that is, the curve 3, the curve 2 is used for a curve part whose pixel luminance is below the anchor (0 to 0.7). For the curve 3 shown in FIG. 5e(3), the curve 2-1 part in FIG. Se(1) is used in a pixel luminance range of 0 to 0.7.
Then, based on a tone mapping value of the curve 2 at the anchor (0.7), that is, the value of y, which is y1 in FIG. Se(1) herein, the curve 1 may be translated or stretched to obtain a curve 1', so that tone mapping values (that is, values of y) of the curve 1' and the curve 2 at the anchor are the same.
For example, FIG. 5e(2) shows a curve diagram of the curve 1. When a tone mapping value at an anchor location (x=0.7) in the curve 1 is y2, for example, P2 (0.7, y2) in the curve 1, because a value range of x is 0 to 1, and a curve below the anchor has been determined from the curve 2, only a curve segment whose value range of x is 0 to 1 needs to be determined from the curve 1 in FIG. 5e(2), that is, a curve segment P2P3. Then, the curve segment P2P3 in the curve 1 may be translated to the x-axis in a reverse direction of the y-axis, and the translation direction is parallel to the y-axis, as shown by a translation arrow in FIG. 5e(2). In this way, in the curve segment P2P3 obtained after translation (that is, a curve segment MN shown in FIG. 5e(2), also referred to as the curve 1'), when a value of x is the anchor 0.7, a value of y is y1, where P2 is M (0.7, y1) after translation, and P3 is a point N after translation. An amount of translation of the curve herein may be (y2-y1).
It should be noted that, in FIG. 5e, the curve 3 is generated by translating the curve 1, or may be generated by scaling or stretching the curve 1. This is not limited in this application.
For the curve 3 shown in FIG. 5e(3), below the anchor, that is, within the pixel luminance range of 0 to 0.7, the curve 2-1 part in FIG. Se(1) is used; and above the anchor, that is, within a pixel luminance range of 0.7 to 1, the MN segment in the curve 1' obtained in FIG. 5e(2) is used, so as to obtain the tone mapping curve, that is, the curve 3 (that is, the target tone mapping curve in FIG. 5a) of the region A.

The point M in FIG. 5e(3) is also the point P1 in FIG. Se(1). Herein, a letter M represents the point.

In addition, in FIG. 5e(2), for example, the curve segment above the anchor in the curve 1 is translated to obtain the curve segment above the anchor in the curve 3. In another embodiment, the curve 1 may alternatively be translated as a whole, and then the curve segment above the anchor is cut from the curve 1 obtained after translation, to connect to the curve 2-1 at the anchor location, so as to obtain the curve 3. This is not limited in this application.

Optionally, because the curve 3 is formed by connecting two curve segments from two curves at the anchor location, the curve 3 is insufficiently smooth, for example, at the anchor location M shown in FIG. 5e(3). Consequently, after tone mapping is performed on the image based on the curve 3, distortion easily occurs when the image is displayed on the display.

Therefore, in this embodiment of this application, as shown in FIG. 5e(3), a curve segment EF of the curve 3 within a preset range (0.7-T2, 0.7+T1) before and after the anchor may be corrected, so that the EF is smoother at M.

Then, the curve segment EF obtained after correction is smoothly connected, at a point E, to a curve segment 0E (that is, a curve segment from the origin to the point E) in the curve 3, and the curve segment EF obtained after correction is smoothly connected, at a point F, to a curve segment FN in the curve 3 (for example, first-order derivative continuity at the point E and the point F), to obtain the curve 3 obtained after correction, that is, the final tone mapping curve of the region A. When the curve 3 obtained after correction is used to perform tone mapping display on image pixels, a high-frequency coefficient is not easily enhanced and the image is not easily distorted.

S207: The receive end performs tone mapping processing on the region A based on the tone mapping curve 3, to obtain image display information of the region A.

It should be noted that a sequence of performing S201, S202, and S203 is not limited in this application.

A sequence of performing S204 and S205 is not limited in this application.

For example, as shown in FIG. 5a, the tone mapping curve generation module of the receive end may send the generated target tone mapping curve (for example, the foregoing curve 3) to the tone mapping module.

The tone mapping module may perform tone mapping processing on the region A in the image 1 based on the curve 3, to adjust image pixels of the region A in the image 1, so as to obtain display luminance of each pixel luminance in the region A on the display module.

The display module may display the region A in the image 1 based on the display luminance corresponding to each pixel in the region A in the image 1, and can display, on the display module, the image 1 whose pixels are adjusted, to adapt the image 1 to the backlight luminance of the display.

Similarly, when the image 1 includes a plurality of regions A, the display module may display each region Abased on respective image display information.

Performing tone mapping on an image may be understood as mapping in a dynamic range, for example, mapping in a dynamic range, as shown in FIG. 3.

Mapping in a dynamic range may be performed by using a static mapping method and a dynamic mapping method.

For example, the static mapping method may be described as follows: An overall tone mapping process is performed based on single data with reference to same video content or same hard disk content. In other words, tone mapping is performed on one or more frames of images based on a same target tone mapping curve, so that the bitstream carries a small amount of information, a processing process of adaptively displaying the image is simpler, and an image display delay is shorter.

The dynamic mapping method may be described as follows: Dynamic tone mapping is performed based on different tone mapping curves with reference to a specific region in an image, each scene, or image content of each frame. In this case, each frame or each scene needs to carry related scene information. Tone mapping processing based on different tone mapping curves may be performed based on the specific region, each scene, or each frame of image, so that tone mapping can be performed based on different tone mapping curves for different scenes, different image regions, and different frames of images. For example, for an image in a bright scene, tone mapping may be performed based on a shooting scene by using a tone mapping curve that focuses on protecting display effect of a bright region.

The static mapping method is equivalent to performing tone mapping on a plurality of frames of images based on a same target tone mapping curve. In this case, a target tone mapping curve generated for one frame of image in the plurality of frames of images may be used as a target tone mapping curve of the plurality of frames of images. When the target tone mapping curve of one frame of image is generated, a global initial gain adjustment curve and a global anchor of the frame of image may be used for implementation.

The dynamic mapping method is equivalent to performing tone mapping on different frames of images, different image regions in a same frame of image, and images in different scenes based on different target tone mapping curves. In this case, a local anchor and a local initial tone mapping curve may be used to generate a target tone mapping curve of each local region.

As described in FIG. 5a, the backlight metadata may include the local or global initial gain adjustment curve and the local or global anchor.

An initial gain adjustment curve of a local region of the image may be referred to as the local initial gain adjustment curve, and an anchor of a local region of the image may be referred to as the local anchor.

An initial gain adjustment curve of one frame of image may be referred to as the global initial gain adjustment curve, and an anchor of one frame of image may be referred to as the global anchor. However, initial gain adjustment curves and anchors of different frames of images may be different.

One initial gain adjustment curve of a plurality of frames of images may also be referred to as the global initial gain adjustment curve. For example, an initial gain adjustment curve of one of the plurality of frames of images may be used as the global initial gain adjustment curve of the plurality of frames of images.

An anchor shared by a plurality of frames of images may be referred to as the global anchor. For example, an anchor may be generated for one of the plurality of frames of images, and the anchor is used as the global anchor of the plurality of frames of images.

For example, when the bitstream includes the global initial gain adjustment curve and the global anchor, the target tone mapping curve of each frame of image may be generated according to the foregoing method based on the initial gain adjustment curve and the anchor of each frame of image. Tone mapping is performed on each frame of image based on the target tone mapping curve of each frame of image, to implement display adaptation between the image and the display.

For example, when the bitstream includes the global initial gain adjustment curve and the global anchor, a target tone mapping curve applicable to the plurality of frames of images may be generated according to the foregoing method based on the global initial gain adjustment curve of the plurality of frames of images and the global anchor of the plurality of frames of images, and tone mapping may be performed on the plurality of frames of images based on a same target tone mapping curve, to implement display adaptation between the images and the display.

For example, when the bitstream includes the local initial gain adjustment curve and the local anchor, for example, different regions in the image 1 have respective local initial gain adjustment curves and respective local anchors, a target tone mapping curve (which is also a local tone mapping curve) may be generated for each region in the image 1 based on the initial gain adjustment curve and the anchor of each region. Then, tone mapping is performed on different regions in the image 1 based on the respective target tone mapping curves, to implement display adaptation between the different regions in the image and the display. Tone mapping may be performed on different regions of a same image based on different tone mapping curves. For another example, for different scenes, a target tone mapping curve of each scene may further be generated based on a local initial gain adjustment curve and a local anchor of each scene, and then tone mapping is performed on images of different scenes based on the target tone mapping curves of the corresponding scenes, to implement display adaptation between the images of the different scenes and the display.

In addition, because generating an anchor and generating an initial gain adjustment curve for an image (or a local image) are two independent processes, an anchor may be generated for a local region, and a global initial gain adjustment curve may be generated for a global image (for example, a frame or a frame sequence).

For example, when the bitstream includes the global initial gain adjustment curve and the local anchor, for each local image, a target tone mapping curve of each local image may be generated based on the local anchor of each local image and the global initial gain adjustment curve. When the target tone mapping curve of each local image is generated, the global initial gain adjustment curve may be used as an initial gain adjustment curve of the local image. A process of generating a target tone mapping curve for each local image is similar to the foregoing processes described in FIG. 5d and FIG. 5e, and details are not described herein again.

For example, when the bitstream includes the local initial gain adjustment curve and the global anchor, for each local image, a target tone mapping curve of each local image may be generated based on the local initial gain adjustment curve of each local image and the global anchor. When the target tone mapping curve of each local image is generated, the global anchor may be used as an anchor of the local image, that is, the local images reuse a same anchor. A process of generating a target tone mapping curve for each local image is similar to the foregoing processes described in FIG. 5d and FIG. 5e, and details are not described herein again.

Although the initial gain adjustment curve and the anchor in the bitstream may not be in a one-to-one correspondence, during use, one initial gain adjustment curve and one anchor are used to generate a target gain adjustment curve of a to-be-displayed image or region, that is, the initial gain adjustment curve and the anchor are used in pairs.

For example, in the foregoing S207, when the receive end performs tone mapping processing on the region A based on the tone mapping curve 3 to obtain image display information of the region A, and when the tone mapping curve 3 is a global tone mapping curve, method 1 is used to implement tone mapping processing, and when the tone mapping curve 3 is a global tone mapping curve, method 2 is used to implement tone mapping processing.

Method 1:

For each pixel of the to-be-displayed image, a luminance value of the pixel displayed on the display is obtained based on the global tone mapping curve.

For example, gain may be calculated based on formula (7):

$$\text{gain}=f[i](\max(Rp, Gp, Bp))/\max(Rp, Gp, Bp), \text{ formula (7)},$$

where
Rp, Gp, and Bp are different color components of a current pixel P in the to-be-displayed image, and max(Rp, Gp, Bp) represents solution of a maximum component value of the three color components.

f(x) represents a function of the global tone mapping curve used for the to-be-displayed image, and [i] represents that the current pixel P is an $i^{th}$ pixel on which tone mapping is performed in the to-be-displayed image.

Then, tone mapping values of the current pixel P are calculated based on formula (8), formula (9), and formula (10):

$$RpTM[i]=Rp*\text{gain, formula (8)};$$

$$GpTM[i]=Gp*\text{gain, formula (9)};$$

and

$$BpTM[i]=Bp*\text{gain, formula (10)},$$

where
RpTM[i], GpTM[i], and BpTM[i] are tone mapping values of the three color components: red, green, and blue of the current pixel P (that is, a luminance value of the current pixel P that is in the to-be-displayed image and that is displayed on the display).

Method 2:

For each pixel of a local image in the to-be-displayed image, a luminance value of the pixel displayed on the display is obtained based on the local tone mapping curve, where the local tone mapping curve is a local target tone mapping curve generated for the local image, for example, the foregoing curve 3 of the region A.

For example, if the to-be-displayed image 1 is divided into four regions A (that is, four tone mapping regions), a local target tone mapping curve of each region A may be generated for each region A in the foregoing manner of generating the target tone mapping curve.

It should be noted that a specific quantity of local images into which the image 1 is divided (for example, a quantity of regions A) is not limited in this application. Tone mapping may be performed on each local image based on the local tone mapping curve of each local image. In addition, shapes of the local images in the image 1 may be the same or different. This is not limited in this application.

For information about each local image (also referred to as a tone mapping region) into which the image 1 is divided, the information may be, for example, size information of the local image in the image 1, for example, length and width information, to determine the local image. In addition, the information that describes the size of the local image may be carried in the foregoing backlight metadata, so that the receive end separately performs tone mapping on the local images based on the information about the local images and according to the target tone mapping curves of the local images.

For example, when tone mapping is performed on a pixel P in a region A (which may be referred to as an initial region A) in the image 1, a target region A (there may be one or more target regions A) that is closest to the pixel P in space may be determined in the foregoing four regions A, a target tone mapping curve corresponding to the target region A is used as f(x) in formula (7) in the foregoing method 1, and a first tone mapping value of the current pixel P is calculated based on formula (7) to formula (10) in method 1. If there is one first region A, the first tone mapping value is used as a final tone mapping value of the current pixel P. If there are a plurality of target regions A, gain[j] of a $j^{th}$ target region A may be obtained based on formula (7), where j=1, 2, 3, 4, and for a plurality of first tone mapping values corresponding to the target regions A, weighted summation may be performed on the plurality of first tone mapping values, a result of weighted summation is divided by a sum of weight gain[j] corresponding to the target regions A, and an obtained result is used as the final tone mapping value of the current pixel P.

When at least two first tone mapping values of the current pixel P are weighted, j represents the $j^{th}$ region A in the four regions A of the image 1, and j=1, 2, 3, 4. In this case, a weight Weight[j] of the first tone mapping value obtained based on the $j^{th}$ region A may be calculated based on formula (11):

$$Weight\ [j]=f(Num[j]/Numtotal),\ formula\ (11),$$

where
in formula (11), j represents the $j^{th}$ target region A in the four regions A of the image 1, Num[j] represents a quantity of pixels in the $j^{th}$ target region A in the image 1, and Numtotal represents a total quantity of pixels in all target regions A around the current pixel P.

Optionally, for example, f(x) in formula (11) represents a function of a target tone mapping curve of the $j^{th}$ target region A in the image 1.

Optionally, for example, f(x) in formula (11) is power(x, NumStr[j]), where f(x) herein is a specific representation of a tone mapping curve function, NumStr[j] represents intensity information of the $j^{th}$ target region A, and the intensity information represents an attenuation speed of a weighting coefficient of the $j^{th}$ target region, and is a preset value for each region A.

For example, final tone mapping values Rtm, Gtm, and Btm of the current pixel P may be calculated based on formula (12), formula (13), and formula (14):

$$Rtm=\sum(RP*gain[j]*Weight[j])/\sum Weight[j],\ formula\ (12);$$

$$Gtm=\sum(GP*gain[j]*Weight[j])/\sum Weight[j],\ formula\ (13);$$

and

$$Btm=\sum(BP*gain[j]*Weight[j])/\sum Weight[j],\ formula\ (14),$$

where

Rp, Gp, and Bp are different color components of the current pixel P in a region A (for example, the initial region A described above) in the to-be-displayed image 1;

$$gain[j]=f[j](max(Rp,\ Gp,\ Bp))/max(Rp,\ Gp,\ Bp);$$

and
Rp, Gp, and Bp are different color components of the current pixel P, max(Rp, Gp, Bp) represents solution of a maximum component value of the three color components, f[j] is a function of a local target tone mapping curve corresponding to the $j^{th}$ target region A in the image 1, and j is an integer greater than or equal to 1 or less than or equal to 4.

In this embodiment of this application, when the current pixel P is located on a boundary shared by two regions A in the image 1, if grayscale values of two pixels on the boundary are the same, and one pixel is mapped based on a target tone mapping curve of one region A, and the other pixel is mapped based on a target tone mapping curve of the other region A, an image that is of the image 1 and that is located on the two pixels jumps. Therefore, when there are a plurality of (at least two) target regions A, it indicates that the current pixel P is a pixel on a boundary shared by at least two regions A. Respective target tone mapping curves of the at least two regions A around the pixel P may be used to separately perform tone mapping on the pixel P, and at least two first tone mapping values that are obtained are weighted, to obtain the final tone mapping value of the pixel P. In this way, in different image regions having different tone mapping curves, display scenes of different image regions can be considered in display of pixels shared by different image regions, to avoid occurrence of a pixel with a jump exception in a displayed image.

Optionally, after the final tone mapping value is obtained for the pixel P, the receive end in this embodiment of this application may further perform, based on a saturation (color) adjustment algorithm, saturation adjustment on each pixel in the region A obtained after tone mapping is performed based on the target tone mapping curve.

Optionally, for the local or global initial gain adjustment curve in FIG. 5a, data of the curve may not be directly carried in the backlight metadata, and a parameter of the initial gain adjustment curve and a type of the curve may be carried in the backlight metadata. In this case, the receive end may obtain the curve type and the parameter from the backlight metadata, and obtain the local or global target tone mapping curve based on an HDR source or an SDR source.

For example, the HDR source or the SDR source may be understood as a to-be-processed video or image at the receive end. The HDR source or the SDR source may include but is not limited to image data, such as pixel data.

For example, the backlight metadata may include but is not limited to: a data format of the HDR source or the SDR source, division information of image regions, traversal sequence information of image regions, an image feature, a curve parameter of a local or global initial gain adjustment curve, and one or more metadata information units. The metadata information unit may include coordinate information, the foregoing image feature, the foregoing curve parameter of the initial gain adjustment curve, and the like.

It should be noted that a format of the backlight metadata is not limited in this application. The backlight metadata may include, for example, histogram information and parameter information of a tone mapping curve as in the ST2094-40 standard, or may include, for example, parameter information of a tone mapping curve as in the ST2094-10 standard.

As described above, the initial gain adjustment curve in the backlight metadata may be any conventional tone mapping curve. For example, the receive end may obtain curve parameters a, b, p, m, and n of the initial gain adjustment curve from the metadata information unit and the HDR source or the SDR source in the bitstream, to obtain the initial gain adjustment curve. Then, the target tone mapping curve may be obtained based on the anchor, the initial gain adjustment curve, and the to-be-displayed image, where the target tone mapping curve may still include the foregoing curve parameters.

For example, a function of the target tone mapping curve may be shown in formula (15):

$$L' = F(L) = a \times \left( \frac{p \times L^n}{(p-1) \times L^n + 1} \right)^m + b, \text{ formula (15)}.$$

Based on the target tone mapping curve in formula (15), a mapping relationship between normalized HDR source data or normalized SDR source data (for example, the to-be-displayed image) and normalized HDR display data (for example, a display value of each pixel that is of the to-be-displayed image and that is displayed on the display) may be obtained.

It should be noted that L and L' may be normalized optical signals or electrical signals. This is not limited in this application.

It should be noted that a data format of the HDR source or the SDR source in the bitstream in which the receive end is located is not limited in this application. For example, in terms of color space of pixel data, a pixel in a to-be-displayed image or video may be YUV or RGB. For another example, in terms of a bit width of data, each pixel in the to-be-displayed image may be 8 bits, 10 bits, 12 bits, or the like.

For an image or a video in an SDR format or an HDR format, the receive end in this embodiment of this application may perform tone mapping processing on all pixels in the image or the video, so that tone mapping from a high dynamic range to a low dynamic range can be implemented in a scenario in which backlight of the display device is adjustable.

In addition, in this embodiment of this application, an initial tone mapping curve (that is, the initial gain adjustment curve described above) and the anchor that is used to generate the target tone mapping curve may be carried in the bitstream and transmitted to the receive end. During implementation, a hardware channel that is used to transmit a curve and that is integrated in hardware of the electronic device to which the receive end belongs may be reused. This is more convenient for implementation in terms of hardware, and may be applied to hardware channels of all electronic devices.

Embodiment 2:

For the backlight metadata carried in the bitstream in FIG. 1, in Embodiment 2, the backlight metadata may include a pixel-level or downsampling gain adjustment coefficient.

For example, for an image or a video in an SDR or HDR format in the bitstream, each frame of image in the image and the video may have a pixel-level or downsampling gain adjustment coefficient.

For example, the pixel-level or downsampling gain adjustment coefficient may be represented as an image having a same size as an original frame of image. Information about each pixel in the image is a coefficient, which is referred to as the gain adjustment coefficient herein.

For example, the pixel-level or downsampling gain adjustment coefficient may alternatively be represented as follows: For a table corresponding to pixels in an original frame of image, the table is in a one-to-one correspondence with the pixels in the original image, and data in the table is coefficients of the pixels, where the coefficients are referred to as gain adjustment coefficients herein.

A gain adjustment coefficient of a pixel in a highlighted region in each frame of image may be higher than a gain adjustment coefficient of a pixel in a non-highlighted region.

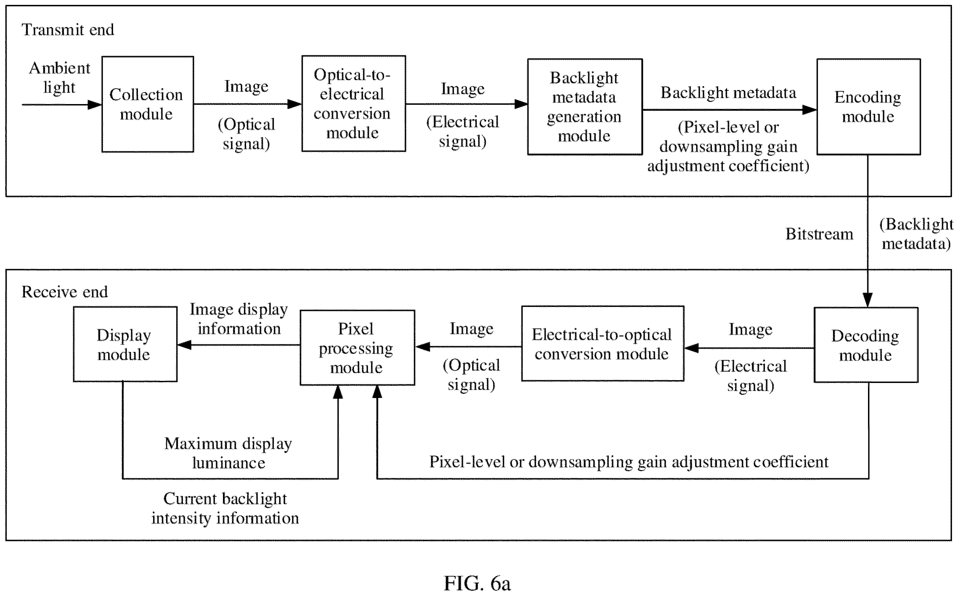

FIG. 6a is an example of a diagram of a system architecture obtained after FIG. 1 is refined. Similarities between FIG. 6a and FIG. 1 and FIG. 5a are not described herein again, and only refined parts relative to FIG. 1 and differences between FIG. 6a and FIG. 5a are described in detail.

It should be understood that the system shown in FIG. 6a is merely an example. The system in this application, and the transmit end and the receive end in the system may have more or fewer components than those shown in the figure, may combine two or more components, or may have different component configurations. The components shown in FIG. 6a may be implemented in hardware including one or more signal processors and/or application-specific integrated circuits, software, or a combination of hardware and software.

As shown in FIG. 6a, the transmit end may include a backlight metadata generation module.

The backlight metadata generation module may generate backlight metadata based on an electrical signal image or an image sequence generated by the optical-to-electrical conversion module. The backlight metadata herein may include a pixel-level or downsampling gain adjustment coefficient of the image.

The gain adjustment coefficient is a gain coefficient, and the gain coefficient represents an amplification multiple.

The pixel-level gain adjustment coefficient of the image is used to adjust a pixel-level display pixel of the image based on the gain adjustment coefficient. For example, if a pixel-level unit is a 4*4 image region, and a gain adjustment coefficient of the image region is 1.2, a value of a display pixel of the 4*4 image region may be increased by 1.2 times, for example, luminance is increased by 1.2 times.

The encoding module may encode the electrical signal image and the backlight metadata, generate a bitstream, and send the bitstream to the receive end.

The following describes a process in which the backlight metadata generation module generates the pixel-level or downsampling gain adjustment coefficient of the image.

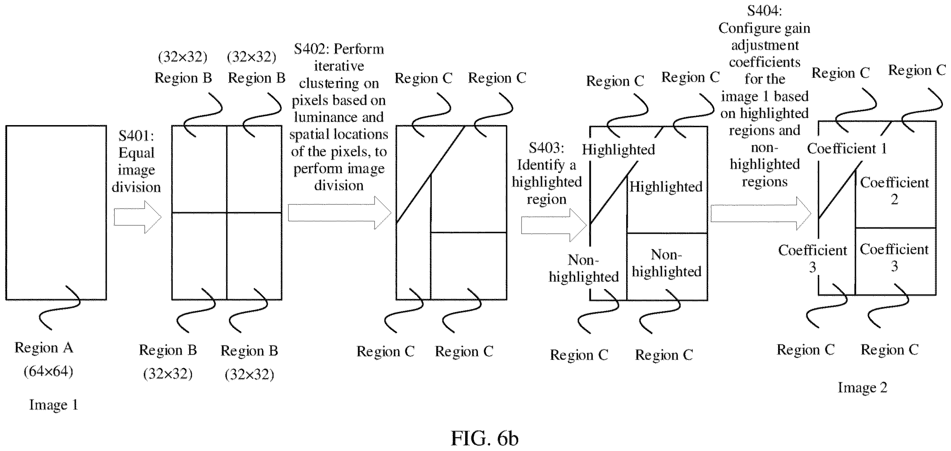

With reference to FIG. 6a and FIG. 6b, an example of a process of generating a gain adjustment coefficient (which is represented as an image 2 shown in FIG. 6b) for an image 1 is shown. In FIG. 6b, an example in which a processing object is the image 1 is used for description.

It can be learned through comparison between FIG. 5b and FIG. 6b that processes of S401, S402, and S403 in FIG. 6b are the same as processes of S401, S402, and S403 in FIG. 5b when an anchor is generated. Herein, refer to the related descriptions in FIG. 5b. Details are not described herein again.

Still with reference to FIG. 6b, after S403, the backlight metadata generation module may perform S404.

S404: The backlight metadata generation module configures gain adjustment coefficients for the image 1 based on the highlighted region and the non-highlighted region, and generates the image 2 that includes the gain adjustment coefficients.

For example, as shown in FIG. 6b, for each region A in the image 1, different gain adjustment coefficients may be configured for pixels in highlighted regions C in the region A and pixels in non-highlighted regions C in the region A.

For example, in FIG. 6b, a coefficient 1, a coefficient 2, a coefficient 3, and a coefficient 4 are respectively configured for the four regions C. The coefficients 1 and 2 corresponding to the two highlighted regions C are greater than the coefficients 3 and 4 of the two non-highlighted regions C.

Optionally, for different highlighted regions C, the backlight metadata generation module may configure different gain adjustment coefficients for the different highlighted regions C based on average luminance of pixels of the highlighted regions C. For example, a gain adjustment coefficient of a region C with higher average luminance is higher than a gain adjustment coefficient of a region C with lower average luminance.

For example, the gain adjustment coefficients of the four regions C in FIG. 6b are respectively: the coefficient 1=1.2, the coefficient 2=1.1, the coefficient 3=0.8, and the coefficient 4=0.5.

For example, a gain adjustment coefficient of a highlighted region C may be greater than 1, and a gain adjustment coefficient of a non-highlighted region C may be less than or equal to 1.

In a possible implementation, gain adjustment coefficients may be generated for the region A in the following manner:

First, an initial gain adjustment coefficient is configured for each region C in the region A, where the initial gain adjustment coefficient may be a first preset coefficient threshold.

For example, the first preset coefficient threshold may be 1.0, 0.8, or the like. A specific threshold may be flexibly configured based on an actual requirement. This is not limited in this application. Optionally, the first preset coefficient threshold is less than or equal to 1.0.

In this way, an initial gain adjustment coefficient may be configured for each region C (which may be understood as a pixel level) in FIG. 6b. For example, initial gain coefficients of $64 \times 64$ pixels in the region A are all 1.0.

When the gain adjustment coefficient is configured, the initial gain adjustment coefficient is configured based on the region C. To be specific, gain adjustment coefficients of all pixels in a same region C are configured as 1.0. Therefore, the gain adjustment coefficient in this embodiment of this application may be referred to as a pixel-level gain adjustment coefficient.

Then, for each highlighted region C in the region A, the initial gain adjustment coefficient is increased by a coefficient multiple.

For example, the coefficient multiple may be a second preset coefficient threshold, for example, 1.2. In this case, the gain adjustment coefficient of the highlighted region C is updated to the first preset coefficient threshold*the second preset coefficient threshold, for example, 1.0* 1.2=1.2. In this case, in FIG. 6b, the coefficient 1=the coefficient 2=1.2, and the coefficient 3=the coefficient 4=1.0.

For example, the backlight metadata generation module may calculate an average luminance value of pixels of each highlighted region C, so that each highlighted region C has a corresponding average luminance value. A coefficient multiple configured for a highlighted region C with a higher average luminance value (for example, the average luminance is greater than or equal to a preset luminance threshold) is a third preset coefficient threshold, and a coefficient multiple configured for a highlighted region C with a lower average luminance value (for example, the average luminance is less than the preset luminance threshold) is a fourth preset coefficient threshold, and the third preset coefficient threshold is greater than the fourth preset coefficient threshold.

For example, if the third preset coefficient threshold is 1.5, and the fourth preset coefficient is 1.2, updated coefficients of the regions C in FIG. 6b are respectively: the coefficient 1=1.5, the coefficient 2=1.2, the coefficient 3=1, and the coefficient 4=1. For example, for the region C corresponding to the coefficient 1, a value of each pixel in the region C in the image 2 is no longer a color value in the image 1, but the coefficient 1, that is, 1.5. In this way, the image 2 of a same size as that of the image 1 can be obtained, and a value of each pixel in the image 2 is a pixel-level gain adjustment coefficient.

Certainly, in another implementation, for the non-highlighted regions C, different gain adjustment coefficients may also be configured based on average luminance of pixels of the regions C. A gain adjustment coefficient of a region C with higher average luminance is greater than a gain adjustment coefficient of a region C with lower average luminance.

It should be noted that the foregoing method for configuring the gain adjustment coefficients for the region A in the image 1 is merely an implementation. In this application, the gain adjustment coefficients of the regions A in the image 1 may be separately configured in another manner. The configuration method is not limited to the foregoing example.

For example, if the image 1 includes a plurality of regions A, different gain coefficients need to be configured for the regions A based on highlighted regions and non-highlighted regions in the regions A. The method is similar, and details are not described herein again.

It can be learned from the foregoing description that, in this application, a gain adjustment coefficient may be configured for pixels in each image region, that is, a pixel level, for example, an image region of a size such as 4*10 or 8*6. In this case, an image of a same size as that of the image 1, that is, the 64*64 image 2 is obtained after S404, and a value of each pixel in the image 2 is a gain adjustment coefficient configured by the backlight metadata generation module.

In the foregoing implementation, an example in which the transmit end in FIG. 6a generates a pixel-level or downsampling gain adjustment coefficient is used for description, so that the pixel-level or downsampling gain adjustment coefficient can be transmitted to the receive end as an attribute of the bitstream.

It should be noted that the receive end in this embodiment of this application may also include a backlight metadata generation module, to perform the foregoing operations, so as to generate a pixel-level or downsampling gain adjustment coefficient. A method is similar, and details are not described herein again.

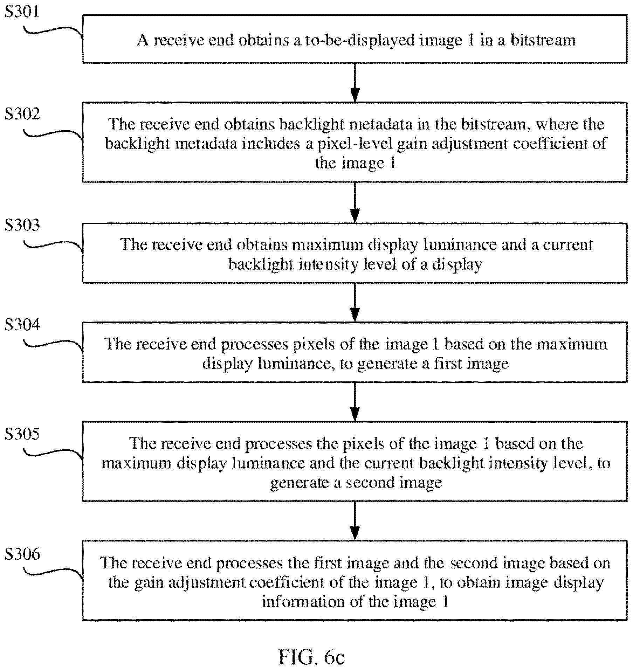

Continue to return to FIG. 6a. The following describes an execution process of the receive end in FIG. 6a with reference to FIG. 6c.

It can be learned through comparison between FIG. 1 and FIG. 6a that the display adaptation module in FIG. 1 may include a pixel processing module shown in FIG. 6a.

With reference to FIG. 6c, the following describes an operating process of the pixel processing module in FIG. 6a.

As shown in FIG. 6c, the process may include the following steps.

S301: The receive end obtains the to-be-displayed image 1 in the bitstream.

This step is similar to S201 in FIG. 5d, and details are not described herein again.

S302: The receive end obtains the backlight metadata in the bitstream, where the backlight metadata includes a pixel-level gain adjustment coefficient of the image 1.

For example, as shown in FIG. 6a, the decoding module may decode the bitstream, to obtain the backlight metadata, where the backlight metadata may include a pixel-level or downsampling gain adjustment coefficient of an image in the bitstream.

The pixel-level or downsampling gain adjustment coefficient may be a gain adjustment coefficient of an image or all images in the bitstream. This is not limited in this application.

For example, the image 1 in FIG. 6b is a to-be-displayed image in the bitstream. The decoding module may obtain a pixel-level gain adjustment coefficient of the image 1 (for example, the image 2 in FIG. 6b), and send the pixel-level gain adjustment coefficient to the pixel processing module.

S303: The receive end obtains the maximum display luminance and the current backlight intensity level of the display.

This step is similar to S203 in FIG. 5d. Refer to the foregoing description. Details are not described herein again.

For example, with reference to FIG. 6a, the pixel processing module in the receive end may obtain the maximum display luminance and the current backlight intensity information (which may be the current backlight intensity level or the current target backlight luminance, and this is not limited in this application) of the display of the display device to which the receive end belongs, that is, S303 may be performed by the pixel processing module in FIG. 6a.

S304: The receive end processes pixels of the image 1 based on the maximum display luminance, to generate a first image.

It should be noted that, when the pixels of the image 1 are processed to generate the first image, a luminance value based on which processing is performed is not limited to the maximum display luminance maxT of the display. The luminance value may be a luminance value that is greater than the current target backlight luminance and less than or equal to the maximum display luminance of the display (for example, a weighting result the current target backlight luminance and the maximum display luminance).

For example, an example in which the pixels of the image 1 are processed based on the maximum display luminance to generate the first image is used for description. When the luminance value based on which processing is performed is not the maximum display luminance maxT, a method is similar, and details are not described herein again.

For example, scaling processing may be performed on display pixels (that is, image pixels) of the image 1 based on the maximum display luminance, to obtain the first image (which may be represented by TMvaluemid1 below). It should be noted that a processing manner is not limited to scaling, and may further include another manner. This is not limited in this application.

Manner 1:

For example, a maximum luminance value maxsource of an image pixel of the image 1 may be used as maxY, and an overall scaling factor for the image pixels of the image 1 is S=maxT/maxY. The image pixels of the image 1 are scaled as a whole based on the scaling factor S, that is, a pixel value of each pixel in the image 1 is multiplied by the scaling factor S, to obtain the first image.

The maximum display luminance of the display is maxT.

Manner 2:

The backlight metadata may include a preset luminance value T3.

For example, the preset luminance value T3 may be the target luminance target_maxdisplay originally generated by the curve 0 mentioned in the foregoing Embodiment 1.

A scaling factor is S=maxT/T3. The image pixels of the image 1 are scaled as a whole based on the scaling factor S, that is, a pixel value of each pixel in the image 1 is multiplied by the scaling factor S, to obtain the first image.

The maximum display luminance of the display is maxT.

Considering that when the display has particular backlight, actual luminance of the display may be higher than the backlight luminance. For example, if the maximum display luminance of the display is 500 nits, and the backlight intensity level is 10%, the backlight luminance is 50 nits. However, the electronic device may have a strategy to adjust final luminance of the display, so that the final luminance may be higher than 50 nits. Therefore, in this embodiment, the first image obtained by processing the to-be-displayed image 1 based on the luminance value may be generated based on a luminance value that is greater than the backlight luminance and less than or equal to the maximum display luminance (the maximum display luminance of the display is used herein).

S305: The receive end processes the pixels of the image 1 based on the maximum display luminance and the current backlight intensity level, to generate a second image.

Similar to the execution principle of S304, for example, as shown in FIG. 6a, the pixel processing module may process the display pixels of the image 1 based on the current backlight intensity information (for example, the current backlight intensity level) and the maximum display luminance maxT, to generate the second image (which may be represented by TMvaluemid2 below).

If the current backlight intensity information obtained by the pixel processing module is the current target backlight luminance information, the second image does not need to be generated based on the maximum display luminance of the display module.

For example, a product of the maximum display luminance maxT and the current backlight intensity level Level (that is, the current target backlight luminance $L_x$=maxT*Level) may be used. For example, if the maximum display luminance is 500 and the current backlight intensity level is 10%, the current target backlight luminance is 50, and scaling processing may be performed on the image pixels of the image 1 based on the current target backlight luminance, to obtain the second image. It should be noted that a processing manner is not limited to scaling, and may further include another manner. This is not limited in this application.

Manner 1:

For example, the maximum luminance value maxsource of an image pixel of the image 1 may be used as maxY, and an overall scaling factor for the image pixels of the image 1 is $S=L_x/maxY$. The image pixels (for example, RGB information) of the image 1 are scaled based on the scaling factor S, that is, a pixel value of each pixel in the image 1 is multiplied by the scaling factor S, to obtain the second image.

The maximum display luminance of the display is maxT, and $L_x$=maxT*Level, where Level is the current backlight intensity level of the display.

Manner 2:

The backlight metadata may include a preset luminance value T3.

For example, the preset luminance value T3 may be the target luminance target_maxdisplay originally generated by the curve 0 mentioned in the foregoing Embodiment 1.

The scaling factor is $S=L_x/T3$. The image pixels of the image 1 are scaled as a whole based on the scaling factor S, that is, the pixel value of each pixel in the image 1 is multiplied by the scaling factor S, to obtain the second image.

The maximum display luminance of the display is maxT, and $L_x$=maxT*Level, where Level is the current backlight intensity level of the display.

When the display has particular backlight, for example, the maximum display luminance of the display is 500 nits, and the backlight intensity level is 10%, the backlight luminance is 50 nits. In this embodiment, the to-be-displayed image 1 may be processed based on the current target backlight luminance, to generate the second image.

For example, when the image pixels of the image 1 are scaled as a whole based on the scaling factor S, to obtain the first image, this may be implemented by using any one of the following three methods, and is not limited to the three methods listed herein.

The following three methods are described by using an example of generating the first image (TMvaluemid1). When the second image (TMvaluemid2) is generated, the following three methods are similar, and details are not described herein again.

Method 1:

TMvaluemid1.R=scaling factor S*h(R value of the to-be-displayed image);
TMvaluemid1.G=scaling factor S*h(G value of the to-be-displayed image); and
TMvaluemid1.B=scaling factor S*h(B value of the to-be-displayed image).

Method 2:

TMvaluemid1.R=scaling factor S*(h(R value of the to-be-displayed image)+gain adjustment coefficient 2);
TMvaluemid1.G=scaling factor S*(h(G value of the to-be-displayed image)+gain adjustment coefficient 2); and
TMvaluemid1.B=scaling factor S*(h(B value of the to-be-displayed image)+gain adjustment coefficient 2).

Method 3:

TMvaluemid1.R=scaling factor S*h(R value of the to-be-displayed image)+gain adjustment coefficient 2;
TMvaluemid1.G=scaling factor S*h(G value of the to-be-displayed image)+gain adjustment coefficient 2; and
TMvaluemid1.B=scaling factor S*h(B value of the to-be-displayed image)+gain adjustment coefficient 2.

For example, the to-be-displayed image is the foregoing image 1, and TMvaluemid1 represents the foregoing first image;

TMvaluemid1.R represents a value of an R channel of the first image;
TMvaluemid1.G represents a value of a G channel of the first image;
TMvaluemid1.B represents a value of a B channel of the first image; and
a function expression of h(x) may be h(x)=x, a formula for mutual conversion between PQ, HLG, and gamma, or a function formula of another curve. This is not limited in this application.

The pixel-level or downsampling gain adjustment coefficient in the backlight metadata may include a gain adjustment coefficient 1 and a gain adjustment coefficient 2, that is, two groups of gain adjustment coefficients. Certainly, each group of gain adjustment coefficients is the same as that of the original image.

For a manner of generating the gain adjustment coefficient 1, refer to the embodiment in FIG. 6b. Details are not described herein again.

The backlight metadata generation module may further generate the gain adjustment coefficient 2.

With reference to FIG. 6a, there is an image signal loss (for example, may be converted into a floating point number difference) between an image of ambient light collected by the collection module and an image of an electrical signal generated by the optical-to-electrical conversion module. The backlight metadata generation module may use the image signal loss as the gain adjustment coefficient 2. A pixel value of each pixel in the gain adjustment coefficient 2 is an image signal lost by each pixel.

For example, a 12-bit image may be converted into an 8-bit image by using the collection module and the optical-to-electrical conversion module. In this case, 4-bit image data is lost by each pixel in the image, and the 4-bit data lost by each pixel may be used as a pixel value of a corresponding pixel in the gain adjustment coefficient 2.

The first image and the second image are obtained based on the gain adjustment coefficient 2 and the gain adjustment coefficient 1, so that a contrast of the images can be improved.

S306: The receive end processes the first image and the second image based on a gain adjustment coefficient of the image 1, to obtain image display information of the image 1.

It should be noted that a sequence of performing S301, S302, and S303 is not limited in this application.

A sequence of performing S304 and S305 is not limited in this application.

For example, with reference to FIG. 6a, the pixel processing module of the receive end may process, based on the gain adjustment coefficient (for example, the image 2 in FIG. 6b) that is of the image 1 and that is in pixel-level gain adjustment coefficients, the first image and the second image corresponding to the image 1, to obtain the image display information of the image 1 on the display, that is, tone mapping of each pixel in the image 1.

For example, Tmvalue=W*TMvaluemid1+(1-W)*TMvaluemid2, formula (16), where

Tmvalue in formula (16) represents a tone mapping value of each pixel in the image 1; and
TMvaluemid1 represents the first image, and TMvaluemid2 represents the second image.

For example, W may represent the gain adjustment coefficient of the image 1, for example, may be represented as the image 2 generated in FIG. 6b.

Alternatively, for example, W may represent a function such as a square of the gain adjustment coefficient 1 of the image 1.

To be specific, the gain adjustment coefficient 1 or a function of the gain adjustment coefficient 1 of the image 1 may be used as a weight, to perform weighted summation on the first image and the second image, so as to obtain the tone mapping value of the image 1.

Alternatively,

for example, Tmvalue=W*TMvaluemid2, formula (17), where
Tmvalue in formula (17) represents a tone mapping value of each pixel in the image 1; and
TMvaluemid1 represents the first image.

For example, W may be the gain adjustment coefficient of the image 1 (for example, may be represented as the image 2 generated in FIG. 6b).

Alternatively, for example, W may be a function A(x) of the gain adjustment coefficient 1 of the image 1, for example, A(x)=1+(S-1)*x, where x represents the gain adjustment coefficient 1 of the image 1, and S represents the scaling factor used when the first image or the second image is generated. It should be noted that the A(x) function is not limited herein.

For example, Tmvalue is final image pixel information of each pixel in the image 1 at the current target backlight luminance, and the tone mapping value of each pixel in Tmvalue is a display value (or a final RGB value) of each pixel in the image 1 on the display.

In this embodiment, the to-be-displayed image 1 may be processed based on the current target backlight luminance to obtain the second image, and based on respective gain adjustment coefficients of the highlighted region and the non-highlighted region in the image 1, the highlighted region in the second image is brightened, and the non-highlighted region (for example, a dark region) is darkened, to obtain display luminance of each pixel in the image 1 on the screen. For example, if a gain adjustment coefficient of a region in the image 1 is 1.5, display luminance of the region may be increased by 1.5 times when the region is displayed. As a result, the region may be excessively bright when displayed. In this case, optionally, clamping processing may be performed on Tmvalue by using the first image TMvaluemid1, to avoid excessive luminance of some regions when the image 1 is displayed on the display.

Optionally, when the gain adjustment coefficient in the backlight metadata is a downsampling gain adjustment coefficient, the downsampling gain coefficient and a pixel of the to-be-displayed image (for example, the image 1) may be in a one-to-one correspondence or a one-to-many correspondence such as a one-to-four correspondence or a one-to-sixteen correspondence. In this case, when display luminance of each pixel of the image 1 on the screen is obtained based on the downsampling gain adjustment coefficient, a correspondence between the downsampling gain adjustment coefficient and the pixel of the image 1 may be obtained. Then, based on the correspondence, a corresponding pixel in the image 1 is processed based on a corresponding downsampling gain coefficient. A specific processing manner is similar to a principle of a process of processing the image 1 based on a pixel-level gain coefficient described in the foregoing Embodiment 2. Refer to the foregoing descriptions, and details are not described herein again.

In this embodiment of this application, pixel-level gain adjustment coefficients are carried in the bitstream, so that when an image is displayed in a scenario in which backlight is adjustable, display luminance of each pixel on the display can be adjusted based on a gain adjustment coefficient of each pixel in the image. This method is easier to implement in software, and tone mapping can reach a pixel level, and luminance adjustment is more refined, flexible, and more adjustable.

It should be noted that Embodiment 1 and Embodiment 2 may also be combined. To be specific, the backlight metadata may include a local or global initial gain adjustment curve, a local or global anchor, and a pixel-level or downsampling gain adjustment coefficient. For similarities between Embodiment 1 and Embodiment 2, refer to each other.

Optionally, for one frame of image or a frame sequence in the bitstream, the receive end in this embodiment of this application may perform tone mapping on a part of the image, an image region, or a part of the frame sequence based on a target tone mapping curve, to generate a tone mapping value, so as to obtain image display information, and may further obtain image display information of the other part of the image or the frame sequence based on a gain adjustment coefficient corresponding to the image, the current target backlight luminance, and the maximum display luminance of the display.

In a conventional dynamic metadata display adaptation standard or algorithm, display effect of an image or a video on a backlight adjustable device is usually not considered. In a conventional solution, a video is mainly adapted to a maximum display capability (that is, the maximum display luminance) of a screen, and this is not suitable for image or video display in a scenario in which backlight becomes weak, and display effect is poor.

However, in the foregoing system in this embodiment of this application, when backlight of the display is adjustable, luminance adaptation may be performed on the to-be-displayed image or video with reference to the maximum display luminance and the current target backlight luminance of the display, so that display luminance of the image on the display can be automatically adjusted based on an adjustment change of a backlight intensity level, thereby improving display effect of the image or the video when backlight becomes weak.

The following describes an apparatus provided in an embodiment of this application.

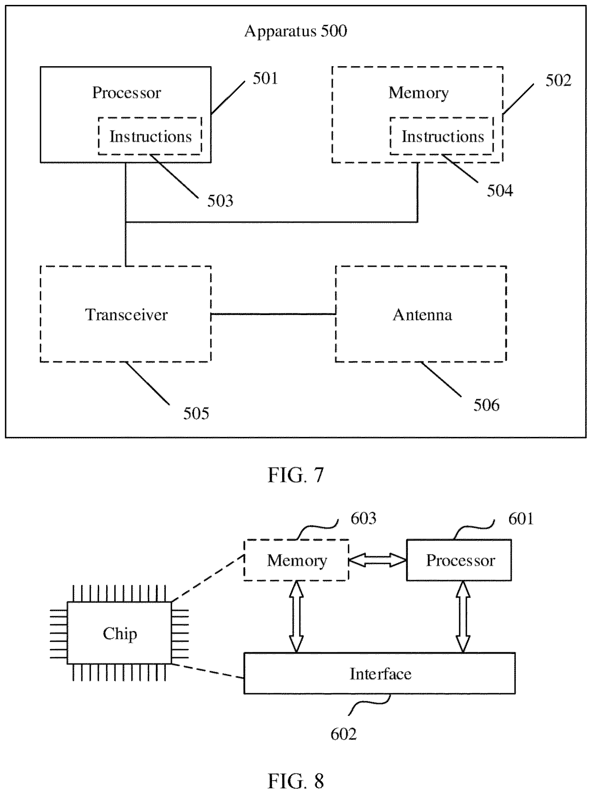

FIG. 7 is a diagram of a structure of an apparatus according to an embodiment of this application. As shown in FIG. 7, the apparatus 500 may include a processor 501 and a transceiver 505, and optionally, may further include a memory 502.

The transceiver 505 may be referred to as a transceiver unit, a transceiver device, a transceiver circuit, or the like, and is configured to implement a transceiver function. The transceiver 505 may include a receiver and a transmitter. The receiver may be referred to as a receiver device, a receiver circuit, or the like, and is configured to implement a receiving function. The transmitter may be referred to as a transmitter device, a transmitter circuit, or the like, and is configured to implement a sending function.

The memory 502 may store a computer program, software code, or instructions 504, where the computer program, the software code, or the instructions 504 may also be referred to as firmware. The processor 501 may implement the methods provided in embodiments of this application by running a computer program or software code or instructions 503 in the processor 501, or by invoking the computer program or the software code or the instructions 504 stored in the memory 502. The processor 501 may be a central processing unit (central processing unit, CPU), and the memory 502 may be, for example, a read-only memory (read-only memory, ROM) or a random access memory (random access memory, RAM).

The processor 501 and the transceiver 505 described in this application may be implemented in an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like.

The apparatus 500 may further include an antenna 506. Modules included in the apparatus 500 are merely examples for description, and this is not limited in this application.

As described above, a structure of the apparatus described in the foregoing embodiment may not be limited by FIG. 7. The apparatus may be an independent device or may be a part of a large device. For example, an implementation form of the apparatus may be:

(1) an independent integrated circuit IC, a chip, or a chip system or subsystem; (2) a set including one or more ICs, where optionally, the set of ICs may also include a storage component for storing data and instructions; (3) a module that can be embedded in another device; (4) a vehicle-mounted device or the like; or (5) others.

For a case in which the implementation form of the apparatus is a chip or a chip system, refer to a diagram of a structure of a chip shown in FIG. 8. The chip shown in FIG. 8 includes a processor 601 and an interface 602. There may be one or more processors 601, and there may be a plurality of interfaces 602. Optionally, the chip or the chip system may include a memory 603.

All related content of the steps in the foregoing method embodiments may be referenced to function descriptions of corresponding functional modules, and details are not described herein again.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing method embodiments.

Based on a same technical concept, an embodiment of this application further provides a computer program. When the computer program is executed by a terminal device, the computer program is used for implementing the foregoing method embodiments.

The entire program or a part of the program may be stored in a storage medium encapsulated with a processor, or a part of the program or the entire program may be stored in a memory that is not encapsulated with a processor.

Based on a same technical concept, an embodiment of this application further provides a chip, including a network interface controller and a processor. The network interface controller and the processor may implement the foregoing method embodiments.

Methods or algorithm steps described in combination with the content disclosed in embodiments of this application may be implemented by hardware, or may be implemented by a processor by executing software instructions. The software instructions may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. An example storage medium is coupled to the processor, so that the processor can read information from the storage medium and write information into the storage medium. Certainly, the storage medium may alternatively be a component of the processor. The processor and the storage medium may be located in an ASIC.

A person skilled in the art should be aware that, in the foregoing one or more examples, functions described in embodiments of this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer storage medium and a medium, where the medium includes any medium that facilitates a computer program to be transmitted from one place to another. The storage medium may be any available medium accessible to a general-purpose or a dedicated computer.

Embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. An image processing method, comprising:

obtaining first display information of a to-be-displayed target image based on current target backlight luminance of a display;
obtaining second display information of the target image based on maximum display luminance of the display and the current target backlight luminance;
processing the first display information and the second display information based on preset information of the target image, to obtain third display information of the target image, wherein the preset information comprises information related to luminance of the target image; and
displaying the target image on the display based on the third display information.

**2.** The method according to claim 1, wherein the obtaining first display information of a to-be-displayed target image based on current target backlight luminance of a display comprises:

obtaining a first tone mapping curve of the to-be-displayed target image; and
processing the first tone mapping curve based on the current target backlight luminance of the display, to obtain a second tone mapping curve of the target image as the first display information.

**3.** The method according to claim 2, wherein the obtaining second display information of the target image based on maximum display luminance of the display and the current target backlight luminance comprises:

determining first luminance based on the maximum display luminance of the display and the current target backlight luminance, wherein the first luminance is higher than the current target backlight luminance; and
processing the first tone mapping curve based on the first luminance, to obtain a third tone mapping curve of the target image as the second display information.

**4.** The method according to claim 3, wherein the preset information comprises second luminance of the target image, and the processing the first display information and the second display information based on preset information of the target image, to obtain third display information of the target image comprises:

obtaining the second luminance of the target image;
extracting, from the second tone mapping curve, a first sub-curve whose pixel luminance is less than or equal to the second luminance;
obtaining a first tone mapping value that corresponds to the second luminance and that is in the second tone mapping curve;
processing the third tone mapping curve based on the first tone mapping value, to generate a fourth tone mapping curve, wherein a tone mapping value that corresponds to the second luminance and that is in the fourth tone mapping curve is the first tone mapping value;
extracting, from the fourth tone mapping curve, a second sub-curve whose pixel luminance is greater than or equal to the second luminance; and
connecting the first sub-curve and the second sub-curve based on the second luminance, and obtaining a target tone mapping curve of the target image as the third display information.

**5.** The method according to claim 4, wherein
the obtaining a first tone mapping curve of the to-be-displayed target image comprises:

obtaining respective first tone mapping curves of a plurality of local regions that constitute the target image;
the obtaining the second luminance of the target image comprises:

obtaining respective second luminance of the plurality of local regions; and
the connecting the first sub-curve and the second sub-curve based on the second luminance, and obtaining a target tone mapping curve of the target image as the third display information comprises:
for the plurality of local regions of the target image, connecting a first sub-curve and a second sub-curve of each of the local regions based on second luminance of each of the local regions, and obtaining respective target tone mapping curves of the plurality of local regions as the third display information of the target image.

**6.** The method according to claim 4, wherein the obtaining the second luminance of the target image comprises:
obtaining the second luminance of the target image based on a minimum value of the pixel luminance and an average value of the pixel luminance of the target image.

**7.** The method according to claim 6, wherein the obtaining the second luminance of the target image based on a minimum value of the pixel luminance and an average value of the pixel luminance of the target image comprises:

clustering image pixels of the target image based on the pixel luminance and pixel locations in the target image, to obtain a plurality of image regions;
classifying the plurality of image regions in the target image based on the pixel luminance, to obtain a first-type image region and a second-type image region, wherein luminance of the first-type image region is higher than luminance of the second-type image region; and
determining the second luminance of the target image based on a minimum value of the pixel luminance and an average value of the pixel luminance in the first-type image region.

8. The method according to claim 1, wherein the obtaining first display information of a to-be-displayed target image based on current target backlight luminance of a display comprises:
processing the to-be-displayed target image based on the current target backlight luminance of the display, to obtain a first image as the first display information.

9. The method according to claim 8, wherein the obtaining second display information of the target image based on maximum display luminance of the display and the current target backlight luminance comprises:

    determining third luminance based on the maximum display luminance of the display and the current target backlight luminance, wherein the third luminance is higher than the current target backlight luminance; and
    processing the target image based on the third luminance, to obtain a second image as the second display information.

10. The method according to claim 9, wherein the preset information comprises a gain coefficient of the target image, and the processing the first display information and the second display information based on preset information of the target image, to obtain third display information of the target image comprises:

    obtaining the gain coefficient of the target image; and
    processing the first image and the second image based on the gain coefficient, to generate a third image as the third display information.

11. The method according to claim 10, wherein the obtaining the gain coefficient of the target image comprises:

    clustering image pixels of the target image based on pixel luminance and pixel locations in the target image, to obtain a plurality of image regions;
    classifying the plurality of image regions in the target image based on the pixel luminance, to obtain a first-type image region and a second-type image region, wherein luminance of the first-type image region is higher than luminance of the second-type image region; and
    configuring different gain coefficients for the first-type image region and the second-type image region, wherein a gain coefficient of the first-type image region is greater than a gain coefficient of the second-type image region.

12. The method according to claim 1, wherein the processing the first display information and the second display information based on preset information of the target image, to obtain third display information of the target image comprises:

    obtaining the preset information of the target image from source information of the to-be-displayed target image; and
    processing the first display information and the second display information based on the preset information, to obtain the third display information of the target image.

13. An electronic device, comprising a memory and a processor, wherein the memory is coupled to the processor, the memory stores program instructions, and when the program instructions are executed by the processor, the electronic device is enabled to perform the image processing method according to any one of claims 1 to 12.

14. A computer-readable storage medium, comprising a computer program, wherein when the computer program is run on an electronic device, the electronic device is enabled to perform the image processing method according to any one of claims 1 to 12.

15. A chip, comprising one or more interface circuits and one or more processors, wherein the interface circuit is configured to: receive a signal from a memory of an electronic device, and send the signal to the processor, wherein the signal comprises computer instructions stored in the memory; and when the processor executes the computer instructions, the electronic device is enabled to perform the image processing method according to any one of claims 1 to 12.

**Transmit end**

Ambient light → Collection module → Image (Optical signal) → Optical-to-electrical conversion module → Image (Electrical signal) → Encoding module

Bitstream (including backlight metadata)

**Receive end**

Display module ← Image display information ← Display adaptation module ← Image (Optical signal) ← Electrical-to-optical conversion module ← Image (Electrical signal) ← Decoding module

Backlight metadata

FIG. 1

(1)

(2)

FIG. 2

Ambient light:

Starry sky    Moonlight    Indoor lighting    Outdoor cloudy    Outdoor sunny    Sunshine

$10^{-3}$    1    100    500    2000    $10^9$

Luminance $(cd/m^2)$

Mapping in a dynamic range

Display device:

1    500

Luminance $(cd/m^2)$

FIG. 3

FIG. 4

FIG. 5a

EP 4 443 286 A1

(32×32)    (32×32)
Region B   Region B

S402: Perform
iterative clustering
on pixels in the
region A based on
luminance and
spatial locations
of the pixels

Region C    Region C

S403:
Identify a
highlighted
region

Region C    Region C

Highlighted

Highlighted

Non-
highlighted

Non-
highlighted

S401:
Equal
image
division

Region A
(64×64)

Image 1

Region B    Region B
(32×32)     (32×32)

Region C    Region C

Region C    Region C

S400: Generate an
initial gain
adjustment curve 0
for the region A

S405: Determine, based on
pixel luminance of the
highlighted region C, a
luminance value used as an
anchor of the region A

FIG. 5b

S501 — Generate an initial gain adjustment curve 0 for a region A

S502 — Generate a cumulative distribution histogram of luminance of pixels of the region A based on luminance values of the pixels of the region A

S503 — Based on the histogram, use a luminance value that is in the region A and that is higher than luminance of a preset ratio of pixels in the region A as an anchor of the region A

(1)

(2)

FIG. 5c

S201
A receive end obtains a to-be-displayed image 1 in a bitstream

S202
The receive end obtains backlight metadata in the bitstream, where the backlight metadata includes an initial gain adjustment curve 0 of a region A in the image 1 and first luminance (also referred to as an anchor) of the region A

S203
The receive end obtains maximum display luminance and a current backlight intensity level of a display

S204
The receive end processes the curve 0 based on the maximum display luminance, to generate a curve 1

S205
The receive end processes the curve 0 based on the maximum display luminance and the current backlight intensity level, to generate a curve 2

S206
The receive end processes the curve 1 and the curve 2 based on the anchor of the region A, to generate a tone mapping curve 3 of the region A

S207
The receive end performs tone mapping processing on the region A based on the tone mapping curve 3, to obtain image display information of the region A

FIG. 5d

Curve 2

(1)

Curve 1 and curve 1'

(2)

Curve 3

(3)

FIG. 5e

Transmit end

Ambient light → Collection module → Image (Optical signal) → Optical-to-electrical conversion module → Image (Electrical signal) → Backlight metadata generation module → Backlight metadata (Pixel-level or downsampling gain adjustment coefficient) → Encoding module

Bitstream (Backlight metadata)

Receive end

Display module ← Image display information ← Pixel processing module ← Image (Optical signal) ← Electrical-to-optical conversion module ← Image (Electrical signal) ← Decoding module

Maximum display luminance

Pixel-level or downsampling gain adjustment coefficient

Current backlight intensity information

FIG. 6a

(32×32) (32×32)
Region B Region B

S402: Perform iterative clustering on pixels based on luminance and spatial locations of the pixels, to perform image division

Region C Region C

S403: Identify a highlighted region

Region C Region C

Highlighted

Highlighted

Non-highlighted

Non-highlighted

S404: Configure gain adjustment coefficients for the image 1 based on highlighted regions and non-highlighted regions

Region C Region C

Coefficient 1

Coefficient 2

Coefficient 3

Coefficient 3

S401: Equal image division

Region A
(64×64)

Image 1

Region B Region B
(32×32) (32×32)

Region C Region C

Region C Region C

Region C Region C

Image 2

FIG. 6b

| S301 | A receive end obtains a to-be-displayed image 1 in a bitstream |
|---|---|

| S302 | The receive end obtains backlight metadata in the bitstream, where the backlight metadata includes a pixel-level gain adjustment coefficient of the image 1 |
|---|---|

| S303 | The receive end obtains maximum display luminance and a current backlight intensity level of a display |
|---|---|

| S304 | The receive end processes pixels of the image 1 based on the maximum display luminance, to generate a first image |
|---|---|

| S305 | The receive end processes the pixels of the image 1 based on the maximum display luminance and the current backlight intensity level, to generate a second image |
|---|---|

| S306 | The receive end processes the first image and the second image based on the gain adjustment coefficient of the image 1, to obtain image display information of the image 1 |
|---|---|

FIG. 6c

Apparatus 500

Processor 501

Instructions

Memory 502

Instructions

503

504

Transceiver

Antenna

505

506

FIG. 7

603

601

Memory

Processor

Chip

Interface

602

FIG. 8

## INTERNATIONAL SEARCH REPORT

International application No.

**PCT/CN2022/124254**

**A.  CLASSIFICATION OF SUBJECT MATTER**

G06F 3/14(2006.01)i

According to International Patent Classification (IPC) or to both national classification and IPC

**B.  FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 图像, 显示, 背光, 亮度, 强度, 等级, 最大, 色调, 映射, 曲线, 平均, 动态范围, 校正, 增益, image?, display+, screen, backlight, luminance, brightness, level, max+, tone, map+, curve, averag+, dynamic, range, correct +, gain

**C.  DOCUMENTS CONSIDERED TO BE RELEVANT**

| Category* | Citation of document, with indication, where appropriate, of the relevant passages | Relevant to claim No. |
|---|---|---|
| A | WO 2021222310 A1 (DOLBY LABORATORIES LICENSING CORP.) 04 November 2021 (2021-11-04) description, paragraph [0020] | 1-15 |
| A | JP 2010074222 A (SONY CORP.) 02 April 2010 (2010-04-02) entire document | 1-15 |
| A | US 2010265263 A1 (WINTEK CORP.) 21 October 2010 (2010-10-21) entire document | 1-15 |
| A | CN 105139809 A (QINGDAO HISENSE ELECTRIC CO., LTD.) 09 December 2015 (2015-12-09) entire document | 1-15 |
| A | CN 113674718 A (BEIJING XIAOMI MOBILE SOFTWARE CO., LTD.) 19 November 2021 (2021-11-19) entire document | 1-15 |
| A | CN 113628106 A (HUAWEI TECHNOLOGIES CO., LTD.) 09 November 2021 (2021-11-09) entire document | 1-15 |

☑ Further documents are listed in the continuation of Box C.   ☑ See patent family annex.

| | |
|---|---|
| *     Special categories of cited documents: "A" document defining the general state of the art which is not considered to be of particular relevance "E" earlier application or patent but published on or after the international filing date "L" document which may throw doubts on priority claim(s) or which is cited to establish the publication date of another citation or other special reason (as specified) "O" document referring to an oral disclosure, use, exhibition or other means "P" document published prior to the international filing date but later than the priority date claimed | "T" later document published after the international filing date or priority date and not in conflict with the application but cited to understand the principle or theory underlying the invention "X" document of particular relevance; the claimed invention cannot be considered novel or cannot be considered to involve an inventive step when the document is taken alone "Y" document of particular relevance; the claimed invention cannot be considered to involve an inventive step when the document is combined with one or more other such documents, such combination being obvious to a person skilled in the art "&" document member of the same patent family |

| Date of the actual completion of the international search | Date of mailing of the international search report |
|---|---|
| **03 November 2022** | **25 November 2022** |

| Name and mailing address of the ISA/CN | Authorized officer |
|---|---|
| China National Intellectual Property Administration (ISA/ CN) No. 6, Xitucheng Road, Jimenqiao, Haidian District, Beijing 100088, China | |
| Facsimile No. (86-10)62019451 | Telephone No. |

Form PCT/ISA/210 (second sheet) (January 2015)

**INTERNATIONAL SEARCH REPORT**

| International application No. |
|---|
| **PCT/CN2022/124254** |

**C.    DOCUMENTS CONSIDERED TO BE RELEVANT**

| Category* | Citation of document, with indication, where appropriate, of the relevant passages | Relevant to claim No. |
|---|---|---|
| A | CN 112215760 A (HUAWEI TECHNOLOGIES CO., LTD.) 12 January 2021 (2021-01-12) entire document | 1-15 |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| WO | 2021222310 | A1 | 04 November 2021 | TW | 202147831 | A | 16 December 2021 |
| JP | 2010074222 | A | 02 April 2010 | None | | | |
| US | 2010265263 | A1 | 21 October 2010 | TW | 201039632 | A | 01 November 2010 |
| CN | 105139809 | A | 09 December 2015 | US | 2017061897 | A1 | 02 March 2017 |
| CN | 113674718 | A | 19 November 2021 | None | | | |
| CN | 113628106 | A | 09 November 2021 | CN | 114467110 | A | 10 May 2022 |
| | | | | WO | 2021223542 | A1 | 11 November 2021 |
| CN | 112215760 | A | 12 January 2021 | WO | 2021004176 | A1 | 14 January 2021 |
| | | | | KR | 20220020367 | A | 18 February 2022 |
| | | | | EP | 3975106 | A1 | 30 March 2022 |
| | | | | US | 2022122236 | A1 | 21 April 2022 |

**INTERNATIONAL SEARCH REPORT**
Information on patent family members

International application No.

**PCT/CN2022/124254**

Form PCT/ISA/210 (patent family annex) (January 2015)

**REFERENCES CITED IN THE DESCRIPTION**

**Patent documents cited in the description**

- CN 202210033857